(19) Europäisches Patentamt
European Patent Office
Office européen des brevets

(11) **EP 2 735 766 A1**

(12) **EUROPÄISCHE PATENTANMELDUNG**

(43) Veröffentlichungstag:
**28.05.2014   Patentblatt 2014/22**

(51) Int Cl.:
**F16H 1/16** *(2006.01)*

(21) Anmeldenummer: **12007862.1**

(22) Anmeldetag: **21.11.2012**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **IMO Holding GmbH**
**91350 Gremsdorf (DE)**

(72) Erfinder:
• **Frank, Hubertus**
 **91315 Höchstadt a.d. Aisch (DE)**
• **Dietz, Volker**
 **91315 Höchstadt a.d. Aisch (DE)**

(74) Vertreter: **Küchler, Stefan**
 **Patentanwalt**
 **Färberstrasse 20**
 **90402 Nürnberg (DE)**

(54) **Schwenkantriebs- oder Schneckengetriebesystem und damit ausgerüstete Maschine bzw. Anlage oder Fahrzeugbaugruppe**

(57)     Die Erfindung betrifft ein wartungsoptimiertes Schwenkantriebs- oder Schneckengetriebesystem (1), zur Installation in einer Anlage bzw. Maschine (38) oder als Baugruppe eines Fahrzeuges (34), aufweisend eine Schneckenwelle (5) und ein in diese Schneckenwelle (5) eingeformtes oder eingearbeitetes Schraubengewinde (4), sowie ein mit diesem Schraubengewinde (4) kämmendes Schneckenrad (2) das durch ein Gehäuse (14) geschützt ist und innerhalb dieses Gehäuses (14), verdrehbar gelagert ist. Die Erfindung ist dadurch gekennzeichnet, dass mindestens eine Schneckenwelle (5) von einem Gehäuseteil oder Gehäuseabschnitt (12) geschützt ist, wobei dieser Gehäuseteil-/ abschnitt (12) einen oder mehrere Aufnahme- oder Befestigungsort(e) (A ; B ; S) für Sensoren bzw. Sensorik (15) vorsieht, zur Erfassung von Messgrößen oder Daten oder Signalen (33) der Schneckenwelle (5), insbesondere von Überlast- und/ oder Positions- und/ oder Lagemessgrößen entlang oder orthogonal zu deren Längsachse (6). Ein entsprechendes Verfahren zur Zustandsbasierten Wartung oder Wartungsoptimierung wird ebenso bereitgestellt.

Fig. 9 b

EP 2 735 766 A1

**Beschreibung**

Die Erfindung richtet sich auf ein wartungsoptimiertes Schwenkantriebs- oder Schneckengetriebesystem, vorteilhafterweise zur Installation in einer Anlage bzw. Maschine oder als Baugruppe eines Fahrzeuges, aufweisend mindestens eine Schneckenwelle und wenigstens ein in diese Schneckenwelle eingeformtes oder eingearbeitetes Schraubengewinde, sowie ein mit diesem Schraubengewinde kämmendes Anschlusselement, vorzugsweise welches ausgeprägt ist als ein Schneckenrad das mindestens über eine in das Schraubengewinde eingreifende Verzahnung mit der mindestens einen Schneckenwelle kämmt, wobei das wenigstens eine Anschlusselement durch ein zumindest zweiseitig geschlossenes oder vollgeschlossenes Gehäuse, beispielsweise ein metallisches Guß- oder Schmiedegehäuse, geschützt ist und innerhalb dieses Gehäuses, insbesondere mittels Drehverbindung(en) oder Wälzlagerung(en), verdrehbar gelagert ist, wobei mindestens eine Ring- oder Planfläche des Anschlusselementes oder des umgebenden Gehäuses zur Anbringung an benachbarte Anschlusskonstruktion(en) beispielsweise mittels kranzartig angeordneten Verschraubungen des Anschlusselementes an ein mit Befestigungsbohrungen versehenes Maschinen-, Fahrzeug-, oder Anlagenteil, vorgesehen ist. Die Erfindung ist dadurch gekennzeichnet, dass die mindestens eine Schneckenwelle von einem, beispielsweise vom Gehäuse separierten, eigens dafür vorgesehenen, Gehäuseteil oder Gehäuseabschnitt geschützt ist, wobei dieser Gehäuseteil-/ abschnitt einen oder mehrere Aufnahme- oder Befestigungsort(e) für Sensoren bzw. Sensorik vorsieht, alternativ sogar das Gehäuse einen oder mehrere Aufnahme-/Befestigungsort(e) für Sensoren bzw. Sensorik vorsieht, vorzugsweise für Sensorik zur Erfassung von Messgrößen oder Daten oder Signalen der Schneckenwelle, insbesondere von Überlast- und/ oder Positions- und/ oder Lagemessgrößen entlang oder orthogonal zu deren Längsachse, alternativ oder zusätzlich sogar für Sensorik zur Erfassung weiterer Messgrößen, beispielsweise des Anschlusselementes. Mindestens ein entsprechendes Verfahren zur Diagnose und/ oder Überwachung zwecks zustandsbasierter oder optimierter Wartung wird ebenso bereitgestellt. Weitere Vorteile und technische Merkmale ergeben sich aus der Beschreibung und den Patentansprüchen. In einer vorteilhaften Ausgestaltung der Erfindung werden die durch vorgenannte Sensorik gewonnenen Positions- und/ oder Lagemessgrößen zur Ermittlung des Wartungs- und/ oder Verschleißzustandes des Schwenkantriebs - oder Schneckengetriebesystems herangezogen.

Stand der Technik:

Schneckengetriebe im Allgemeinen bieten gleichzeitig eine Änderung der Drehrichtung sowie eine Untersetzung der Drehzahl zwischen einem antreibenden und einem angetriebenen Maschinenteil. Die damit verbundene Drehmomentübersetzung erlaubt es, mit Antriebsmitteln kleinerer Leistung schwere Fahrzeug- oder Anlagen- bzw. Maschinenteile zu drehen oder zu schwenken.

Es gibt überdies selbsthemmende Schneckengetriebe, welche gleichzeitig als Stillstandsbremse verwendet werden können. Aufgrund dieser vorteilhaften Eigenschaften werden solche Schneckengetriebe häufig bei Schwerlastantrieben verwendet, wo große Kräfte und Drehmomente auftreten, beispielsweise in Baumaschinen und -fahrzeugen, Kränen, Abbruchgeräten, Windkraftanlagen, etc. Bei derartigen Fahrzeugen, Maschinen und Anlagen besteht allerdings die Gefahr eines starken Verschleißes, unter anderem auch deshalb, weil bei solchen Anwendungen oftmals nicht restlos beherrschbare Naturkräfte einwirken wie große Gewichtskräfte, Neigungskräfte, Windkräfte, etc.

Daraus können Betriebszustände resultieren, welche nicht unerheblichen Einfluss auf den Verschleiß des betreffenden Schneckengetriebes haben. Dazu kommt, dass auch der absolute Überrollwinkel oftmals in weiten Grenzen schwanken kann, woraus sich ebenfalls eine vorzeitige Alterung bestimmter Elemente des Schneckengetriebes ergeben kann.

Der solchermaßen auftretende Verschleiß ist insbesondere wichtig im Hinblick auf das Wälzkörper-Laufbahnsystem, aber auch hinsichtlich der Verzahnung. Während für Ersteres vor allem der absolut zurückgelegte Überrollwinkel relevant ist, leidet die Verzahnung vor allem unter einer häufigen oder permanenten Drehmomentbelastung des Schneckengetriebes.

Im Stand der Technik wird den unterschiedlichsten in der Praxis anzutreffenden Belastungsfällen vor allem dadurch Rechnung getragen, dass die Wartungsintervalle genügend kurz gewählt werden, um damit das Gros der Schneckengetriebe ausreichend zu überwachen. Dennoch ist diese Maßnahme nicht wirklich zufriedenstellend. Denn einerseits erfordert eine Wartung mit Inspektion meistens die Demontage und das Zerlegen eines Schneckengetriebes samt dessen Lagers, um den Zustand der Verzahnung, insbesondere aber auch der ansonsten nicht zugänglichen Laufbahnen, erkennen zu können.

Dies ist bei manchen Anwendungen mit einem extremen Aufwand verbunden. Beispielsweise bei Windkraftanlagen, wo ein Ausbau der Rotorlager und Blattlager in luftiger Höhe nur mit einem erhöhten Personal- und Zeitaufwand zu bewältigen ist, insbesondere auch deshalb, weil Windkraftanlagen häufig an schlecht zugänglichen Stellen aufgebaut sind wie im Offshore-Bereich, auf Gipfeln od. dgl. Selbst beim Ausbau eines Schwenktriebes in einem Bagger od. dgl. ist dieser für einen oder meistens sogar mehrere Tage stillgelegt. Solche wartungsbedingten Stillstände kosten in der Praxis teilweise viel Geld.

Andererseits kann es sogar trotz enger Wartungsintervalle vorkommen, dass ein durch übermäßige Beanspruchung erhöhter Verschleiß eine Reparatur bereits vor dem nächsten Wartungstermin erfordert. Solchenfalls wird das aufgetretene Problem meist zu spät erkannt, nämlich erst beim vorzeitigen Ausfall des Gerätes.

Ebenso stark nachteilig ist, dass Prüfung selbst der vorgenannten engen Wartungsintervalle stets von menschlichem Personal durchgeführt werden muss, welches die Anlage oder Vorrichtung inspiziert oder auf Funktionstauglichkeit prüft. Selbst wenn im erwünschten Falle bei einer solchen Inspektion oder Prüfung keine Beschädigung oder kein Verschleiß oder Defekt an der Anlage oder Vorrichtung festgestellt werden kann, fallen Kosten für die Wartung, zumindest in Form von Wartungspersonalzeitkosten, an.

Aufgabe der Erfindung und Beschreibung:

Aus den Nachteilen des beschriebenen Standes der Technik resultiert das die Erfindung initiierende Problem, ein gattungsgemäßes Schwenkantriebs- oder Schneckengetriebe derart auszubilden, dass mit einem geringeren Aufwand, und vor Allem mit höherer Aussagegenauigkeit als dies im vorgenannten Stand der Technik möglich ist, der Verschleißgrad des Schwenkantriebs- oder Schneckengetriebes festgestellt werden kann.

Die Lösung dieses Problems gelingt dadurch, dass im Sinne der vorliegenden Erfindung Sensorikkomponenten verwendet werden, idealerweise im Zusammenspiel mit einem Zustandserkennungs- und Überwachungssystem für verschleißende Komponenten, beispielsweise die Schneckenwelle und/ oder das Schneckenrad eines Schwenkantriebs- oder Schneckengetriebesystems, welche idealerweise durch "Zentralkontrolle bzw. -Überwachung" oder durch "Fernwartung bzw. -Überwachung" die bisherige turnusmäßige Wartung von Anlagen oder Vorrichtungen der Gattung der Schneckengetriebe in gewissem Maße obsolet werden lassen.

Dabei wird das verzahnte Schneckenrad-Anschlusselement des erfindungsgemäßen Schwenk- oder Schneckengetriebes stets aus einem ringförmigen Grundkörper gebildet, welches mit einer unmittelbar eingeformten oder eingearbeiteten Verzahnung sowie mit wenigstens einer in den Grundkörper unmittelbar eingeformten oder eingearbeiteten Laufbahn versehen ist, wobei an dieser Laufbahn Wälzkörper direkt entlanglaufen, sowie mit wenigstens einer ebenen, in den Grundkörper unmittelbar eingeformten oder eingearbeiteten Anschlussfläche zur Anlage an einer ebenen Kontaktfläche des betreffenden Maschinen- oder Anlagenteils versehen ist, sowie mit mehreren, kranzförmig um die lichte Öffnung verteilt angeordneten und in den Grundkörper unmittelbar eingeformten oder eingearbeiteten Befestigungsbohrungen, deren Längsachsen die betreffende Anschlussfläche lotrecht durchsetzen. Dabei ist das unverzahnte Anschlusselement aus einem ringförmigen Grundkörper gebildet und mit wenigstens einer unmittelbar eingeformten oder eingearbeiteten Laufbahn versehen, woran Wälzkörper direkt entlanglaufen, sowie mit wenigstens einer ebenen, in den Grundkörper des unverzahnten Anschlusselements unmittelbar eingeformten oder eingearbeiteten Anschlussfläche zur Anlage an einer ebenen Kontaktfläche des betreffenden Maschinen- oder Anlagenteils. Ferner weist die Erfindung mehrere kranzförmig um die lichte Öffnung verteilt angeordnete und in den Grundkörper des unverzahnten Anschlusselements unmittelbar eingeformte oder eingearbeitete Befestigungsbohrungen auf, deren Längsachsen die betreffende Anschlussfläche lotrecht durchsetzen, wobei im Bereich der Schnecke wenigstens ein Sensor zur permanenten Erfassung der Dreh- und/oder Verschiebe-Position der Schnecke vorgesehen ist, sowie eine Auswertungseinrichtung, um den Absolutwert des gemessenen Dreh- oder Verschiebeweges zu bilden, gegebenenfalls ebenso um diesen aufzuintegrieren.

Bei einem solchen Schneckengetriebe handelt es sich um eine von Fachleuten häufig als Schwenktrieb bezeichnete Baugruppe, welche heutzutage meistens vollständig gekapselt, also von einem Gehäuse umschlossen ist, um Umwelteinflüsse wie bspw. korrodierende Seeluft, Schmutzpartikel, etc. von den sensiblen Bauteilen möglichst fernzuhalten. Als sensible Bauteile im Hinblick auf Verschleissanfälligkeit sollen im Folgenden vor allem die Wälzkörper, deren Laufbahnen sowie die Verzahnung des ringförmigen Schneckenrad-Anschlusselementes und das Gewinde der Schnecke oder der Schneckenwelle betrachtet werden.

Von außen zugänglich sind normalerweise nur zwei zueinander konzentrische, ringförmige Anschlusselemente mit zueinander parallelen, jedoch voneinander abgewandten, ringförmigen Anschlussflächen zur Verbindung mit je einer von zwei gegeneinander verdrehbaren Anlagen- oder Maschinenteilen, ferner je ein Anschluss für den Rotor und den Stator eines Antriebsmotors für die Drehverstellung der beiden ringförmigen Anschlusselemente gegeneinander, sowie ggf. ein weiterer Anschluss für einen Tachometer, einen Potentiometer, eine Vorbaubremse oder gar eine Permanentbremse od. dgl.

Ein solcher Schwenktrieb vereinigt eine Mehrzahl von anwendungstechnisch vorteilhaften Eigenschaften: Eine integrierte, d.h. gehäuse-interne, Lagerung sorgt für eine Parallelausrichtung der beiden Anschlussflächen und damit für eine präzise Parallelführung eines aufgesetzten Anlagenelements gegenüber einem Fundament, Chassis od. dgl., sodass weitere Führungs- oder Lagerungselemente entbehrlich sind.

Mittels eines anschließbaren Motors kann der Relativdrehwinkel oder gar die Relativdrehzahl zwischen den beiden angeschlossenen Anlagenteilen genau eingestellt werden. Der Motor oder Antriebsmotor wird üblicherweise drehfest mit der Schnecke eines Schneckengetriebes gekoppelt, dessen mit der Schnecke kämmender, ringförmiger Zahnkranz nicht an einem Schnecken-Rad, sondern am Umfang eines Schnecken-Rings, nämlich an einem der beiden, ringförmigen Anschlusselemente, umlaufend angeordnet ist, damit der Motor auf jenen drehverstellend einwirken kann.

Eine solche Anordnung sorgt nicht nur für eine Drehmomentübertragung, sondern gleichzeitig auch für eine Drehmomentverstärkung, während gleichzeitig die Drehzahl untersetzt wird. Dies wiederum hat mehrere entscheidende Vorteile:

Zum Einen kann ein herkömmlicher Motor mit einer vergleichsweise hohen Nenndrehzahl und einem relativ niedrigen Nenndrehmoment verwendet werden, weil durch die Untersetzung des Schneckentriebs beide Größen in für einen Schwerlastantrieb günstige Bereiche transformiert werden.

Andererseits kann ein derartiges Schneckengetriebe leicht selbsthemmend gestaltet werden, d.h., große, ja selbst sehr große, durchziehende Lastdrehmomente zwischen den beiden ringförmigen Anschlusselementen können jene nicht gegeneinander verdrehen, weil der Verzahnungseingriff mit der Schnecke dies blockiert. Daher kann in vielen Fällen auf eine Bremse, insbesondere auf eine Stillstandsbremse, verzichtet werden, und auch auf eine Ansteuerung des Motors im Stillstand, so dass konstruktiver Aufwand und Energie gespart werden können. Andererseits birgt dies aber auch Gefahren:

Denn wenn theoretisch unendlich große Drehmomente zwischen den beiden Anschlusselementen blockiert werden, kann ein noch so robust ausgelegter Schwenktrieb beschädigt oder gar zerstört werden, d.h., insbesondere die in Eingriff stehenden Verzahnungs- und Gewindeflanken können beschädigt werden.

In ähnlicher Form kann durch zu große Kippmomente oder Axialkräfte die Lagerung beschädigt oder zerstört werden, insbesondere die Wälzkörper und/oder Laufbahnen.

Aufgrund dieser Zusammenhänge ist die erreichbare Betriebsdauer eines Schwenktriebs jedoch ganz entscheidend von der Art seiner Belastung abhängig. Wird dieser ständig nur mit mäßigen Dreh- und Kippmomenten und Axialkräften belastet, so dass er seine Dauerfestigkeit erreicht, kann er theoretisch unbegrenzt halten; die Betriebsdauer wird allenfalls von sekundären Parametern wie Korrosion, Verschleiß, etc. beeinflusst. Wird der Schwenktrieb jedoch öfters im Bereich seiner Nenndaten oder gar darüber belastet, so ist die Betriebsdauer begrenzt und nimmt mit dem Grad der Be- oder gar Überlastung ab. Aufgrund dessen müssen die Wartungsintervalle eigentlich in Abhängigkeit von dem jeweiligen Belastungsfall festgelegt werden, was sich jedoch in der Praxis nicht realisieren lässt, weil ein spezieller Belastungsfall mangels Messdaten normalerweise nicht neutral beurteilt werden kann.

Als Ersatzmaßnahme hierzu ist erfindungsgemäß vorgesehen, die Belastung des konkreten Anwendungsfalles zu messen, um daraus Eckdaten zur Ermittlung des optimalen Wartungsintervalls zu gewinnen. Diesem Zweck dient ein Sensor zur Beurteilung der auf die Schnecke einwirkenden Kräfte. Denn vor allem Drehmomente zwischen den ringförmigen Anschlusselementen transformieren sich in an der Schnecke angreifenden Axialkräften, so dass Axialverschiebungen oder - kräfte an der Schnecke als Kriterium für die Drehmomentbelastung des Schwenktriebs hervorragend geeignet sind. Axialverschiebungen der Schnecke treten dabei vor allem dann auf, wenn die Schnecke zur Abmilderung von Drehmomentstößen in Axialrichtung federnd gelagert ist.

Aufgrund des Hook'schen Gesetzes ist dabei die Auslenkung der Schnecke proportional zu der axialen Verschiebekraft, mithin proportional zum Drehmoment, welches zwischen den beiden ringförmigen Anschlusselementen anliegt und von der Schnecke aufgebracht oder kompensiert werden muss, und kann somit als Maß für die Belastung der miteinander kämmenden Zahn- und/oder Gewindeflanken dienen. Andererseits ist die Anzahl der Schneckenumdrehungen direkt proportional zu der relativen Umdrehungsanzahl der beiden Anschlusselemente, und stellt somit ein Maß für den Verschleiß der Wälzkörper und Laufbahnen dar.

Durch Aufintegrieren der an der Schnecke messbaren Parameter, der sogenannten Messgrößen, lassen sich also Aufschlüsse gewinnen über die mittlere Belastung des Schwenktriebs, insbesondere im Bereich der Zahn- und Gewindeflanken einerseits und betreffend die Wälzkörper und Laufbahnen andererseits.

Diese aufintegrierten Parameter oder Messgrößen können beispielsweise nach vorgegebenen Zeit- oder Betriebszeitintervallen über eine Tabelle in ein Schema von Belastungsbereichen einklassifiziert werden, um einen untrüglichen Aufschluss über den zu erwartenden Verschleiß im Lager zu erhalten und daraus schließlich Wartungsintervalle zu bestimmen oder aktuelle Wartungsanforderungen zu generieren. In der grundsätzlichen Fachsprache der Messtechnik wird eine solche auf Basis der gemessenen bzw. sensierten Messgrößen erfolgende Vorberechnung als "proaktive Wartung" oder als "Zustandsmonitoring" oder "Zustandserkennung" bezeichnet. In der Automobiltechnik werden beispielsweise Wartungsintervalle von Bremsbelägen oder Luftfiltern nicht mehr "fest vorgegeben", sondern von einer intelligenten Sensorik bedarfsgerecht und jeweils situationsindividuell ermittelt. Diese Art der situationsindividuellen Wartung wird im Englischen auch als "Condition Monitoring" oder "Condition Based Monitoring" bezeichnet.

Durch die vorliegende Erfindung wird demnach das Schneckengetriebe mit Mechanismen zur proaktiven Wartung bzw. mit Vorrichtungen zum Zustandsmonitoring oder zur Zustandserkennung.

Es hat sich als günstig erwiesen, dass in den Grundkörper eines oder beider Anschlusselemente wenigstens je eine Laufbahn unmittelbar eingeformt oder eingearbeitet ist, woran Wälzkörper direkt entlanglaufen.

Direktes Einformen oder Einarbeiten der Laufbahnen in den jeweiligen Grundkörper hat einerseits den Vorteil, dass die Wälzkörper im Verlauf ihrer Rollbewegung niemals einen Stoß vorfinden oder gar überwinden müssen, was die Betriebsdauer deutlich steigert. Andererseits sind die Laufbahnen direkt an die Steifigkeit der Anschlusselemente gekoppelt - und diese eventuell an die Steifigkeit eines angeschlossenen Maschinen- oder Anlagenteils.

Damit sind für die Wälzkörper und Laufbahnen beste Voraussetzungen geschaffen, um eine hohe Lebensdauer zu erreichen. Schließlich sind dadurch eine Reihe störender Parameter eliminiert, so dass die Relation zwischen gemessener Belastung einerseits und zu erwartendem Verschleiß andererseits ziemlich genau vorhersagbar ist, wodurch mithin Wartungsintervalle oder Wartungsanforderungen mit einer hohen Genauigkeit ermittelt bzw. generiert werden können.

Es liegt im Rahmen der Erfindung, dass wenigstens eine Laufbahn und/oder die Verzahnung des verzahnten Anschlusselements und/oder das Gewinde der Schnecke gehärtet ist, vorzugsweise oberflächengehärtet, insbesondere induktiv gehärtet. Auch diese Maßnahme verbessert einerseits die zu erwartende Betriebsdauer und schützt gleichzeitig die sensiblen Elemente des Schwenktriebs vor unvorhergesehenen Schäden, so dass der berechnete Verschleißgrad dieser Teile nicht durch unvorhergesehene Ereignisse beeinflusst wird.

Die Wälzlagerung sollte 20 Wälzkörper oder mehr aufweisen, vorzugsweise 35 Wälzkörper oder mehr, insbesondere 35 Wälzkörper oder mehr. Durch eine große Anzahl von Wälzkörpern verteilen sich beispielsweise Kippmomente, aber auch Axialkräfte, stets auf mehrere Wälzkörper - der einzelne Wälzkörper wird entlastet und geschont und unterliegt somit nur dem allgemeinen Verschleiß, welcher sich anhand der Anzahl der Überrollungen bestimmen lässt.

Aus einem ähnlichen Grund sollte die Verzahnung des verzahnten Schneckenrad-Anschlusselements 20 Zähne oder mehr aufweisen, vorzugsweise 35 Zähne oder mehr, insbesondere 35 Zähne oder mehr. Dadurch kann der Eingriffsbereich auf mehrere Zahn- und Gewindeflanken-Paarungen verteilt werden, insbesondere wenn die Schnecke ein- oder beidseitig des Eingriffspunktes eine sogenannte Globoidverzahnung aufweist, im Englischen auch als "Hourglass" bezeichnet. Der Schneckengrundkörper fügt sich dann dem Schneckenring optimal an.

Ferner empfiehlt die Erfindung, dass pro Anschlusselement 8 Befestigungsbohrungen vorgesehen sind oder mehr, vorzugsweise 12 Befestigungsbohrungen oder mehr, insbesondere 20 Befestigungsbohrungen oder mehr. Mit einer entsprechend großen Zahl von Verschraubungen wird das betreffende Anschlusselement gleichsam mit der Anschlusskonstruktion vereinigt, d.h., beide Teile steifen sich gegenseitig aus.

Damit ist die Gefahr von Verwindungen eines ringförmigen Anschlusselements so weit als möglich reduziert, und die Wälzkörper finden optimale Betriebsbedingungen vor, so dass die Gefahr unvorhersehbarer Beeinträchtigungen oder gar Beschädigungen minimiert ist.

Bei einer Anordnung der Befestigungsbohrungen des verzahnten Anschlusselements in radialer Hinsicht zwischen der rundum laufenden Verzahnung einerseits und einer Laufbahn wenigstens einer Wälzkörperreihe andererseits können alle über diese Konstruktionsmittel eingeleiteten Kräfte und Drehmomente innerhalb einer gemeinsamen Ebene ausgetauscht werden. Dadurch können die einzelnen Kräfte und Drehmomente weitestgehend entkoppelt werden und sind dann anhand der über die Schnecke abgreifbaren Parameter oder Messgrößen besser berechenbar.

Weitere Vorteile lassen sich dadurch erzielen, dass wenigstens eine Laufbahn zur Lagerung der Schneckenwelle direkt in den Wellengrundkörper eingeformt oder eingearbeitet ist.

Dadurch ergibt sich eine auf die wesentlichen Elemente reduzierte Anordnung: Ein Anschlusskörper ist mit dem Gehäuse des Schwenktriebs drehfest verbunden oder gar vereinigt, d.h. integriert; der andere Anschlusskörper ist über wenigstens eine Reihe von Wälzkörpern an dem ersten Anschlusskörper drehbar gelagert und mit einer vorzugsweise rundum laufenden Zahnreihe bestückt; der Wellenkörper ist über wenigstens eine Reihe von Wälzkörpern - vorzugsweise deren zwei - an dem Gehäuse gelagert und kämmt über sein Gewinde mit der Zahnreihe des zweiten Anschlusskörpers. Indem auf gesonderte Lagerbauteile, beispielsweise Lagerringe, Laufringsegmente od. dgl. verzichtet wird, ist die Wahrscheinlichkeit von lagerinternen Verformungen minimiert, die Verhältnisse werden überschaubar und berechenbar. Hierzu trägt insbesondere auch eine folgende Weiterbildung der Erfindung bei, wonach wenigstens eine Laufbahn zur Lagerung der Schneckenwelle wie auch das Schneckengewinde durch Bearbeitung eines einzigen, gemeinsamen Wellengrundkörpers gebildet ist, insbesondere durch Formgebung und/oder vorzugsweise schneidende Bearbeitung desselben.

Um den Verzahnungseingriff zwischen dem Schneckengewinde und der damit kämmenden Zahnreihe auf möglichst viele Zahn- bzw. Gewindeflanken-Paarungen zu verteilen, sollte das Schneckengewinde vier Umläufe aufweisen oder mehr, vorzugsweise sechs Umläufe oder mehr, insbesondere acht Umläufe oder mehr.

Eine weitere Maßnahme zur Verbesserung der Eingriffsverhältnisse besteht darin, den Verlauf der Gewindeverzahnung an der Schneckenwelle und/oder den Querschnitt der Zähne, insbesondere im Bereich ihrer freien Stirnseiten, gegenseitig anzupassen. Dies kann durch sog. Globoidverzahnungen oder -gewinde erfolgen. Dabei erhält die Umhüllende des Schneckenwellen-Umfangs eine in Längsrichtung der Welle konkav gewölbte Gestalt, wobei der (negative) Wölbungsradius des Schneckenwellen-Umfangs etwa dem (positiven) Radius der die vorzugsweise umlaufende Zahnreihe an dem verzahnten Anschlusselement tragenden Außenmantelfläche betragsmäßig entspricht. Andererseits kann der (negative) Wölbungsradius einer in Längsrichtung der Drehachse konkaven Wölbung an dem Außenumfang des verzahnten Anschlusselements etwa dem (positiven minimalen) Radius der Umhüllenden des Schneckengewindes an dem Eingriffspunkt entsprechen. Durch diese Maßnahmen werden die Gewinde- und Zahnflanken entlastet und geschont, der Verschleiß wird geringer und berechenbarer.

Ein die Kräfte und/oder Bewegungen der Schnecke gegenüber deren Gehäuse messender Sensor sollte am Gehäuse der Schnecke festgelegt sein, und zwar derart, dass sein sensibler Bereich der Schneckenwelle zugewandt ist, um diese abzutasten bzw. deren Lage und/oder Bewegung zu erkennen.

Wenn der Sensor berührungslos arbeitet, insbesondere durch magnetische oder optische Abtastung wenigstens eines an der Schnecke festgelegten Referenzelements, so hat er selbst keinerlei Einfluss auf die Betriebsdauer des Schwenktriebs, sondern bleibt ein reiner, am tatsächlichen Geschehen unbeteiligter Beobachter. Die Messung selbst hat also keine die Betriebsdauer direkt oder indirekt verändernde oder verfälschende Wirkung auf den Schwenktrieb.

Auch eine induktive Abtastung oder Sensierung dient der berührungslosen Parameter- oder Messgrößenermittlung

Im Rahmen einer Ausführungsform der Erfindung kann ein (Winkel-) Sensor vorgesehen sein, um die Drehbewegung der Schnecke zu sensieren, woraus Rückschlüsse auf den von den Wälzkörpern überrollten Weg gezogen werden können.

Der Sensor kann beispielsweise als Magnetsensor ausgebildet sein, insbesondere als Hallsensor, welcher bevorzugt mit einem Referenzelement zusammenwirkt, um dessen Relativbewegung zu erkennen. Ein Magnetsensor kann beispielsweise auf einen in oder an der Schneckenwelle angeordneten Magneten reagieren. Zur Vermeidung von Unwuchten könnten an der Schneckenwelle auch zwei Magnete diametral gegenüber liegend angeordnet sein.

Auf Vorsprünge oder Vertiefungen der Schneckenwelle reagieren beispielsweise induktive (Näherungs-) Schalter, welche die Veränderung der Induktivität einer Spule durch einen beweglichen (Metall-) Körper in unmittelbarer Nähe messen.

Zur Drehrichtungserkennung und/oder absoluten Winkelbestimmung könnten zwei oder drei derartige Sensoren verwendet werden, welche in Umfangsrichtung und/oder in axialer Richtung gegeneinander versetzt angeordnet sein können, um auf die selben Magnetkörper, Vorsprünge oder Vertiefungen zu reagieren oder auf unterschiedliche, gegeneinander versetzt angeordnete. Bei drei, um jeweils 120° in Umfangsrichtung gegeneinander versetzten Sensoren kann aus der Reihenfolge ihres Ansprechens auch die Drehrichtung erschlossen werden.

Erstreckt sich ein Referenzkörper oder -magnet etwa über den halben Umfang der Schneckenwelle, so umfasst eine Periode seines Messsignals - bei etwa konstanter Drehzahl der Schneckenwelle - jeweils einen Impuls sowie eine etwa ebenso breite Lücke. Werden zwei derartige Sensoranordnungen mit gleicher Geometrie des Referenzkörpers oder -magneten um etwa ein Viertel des Umfangs gegeneinander versetzt, so gibt es pro Periode vier voneinander unterscheidbare Phasen - je nachdem, ob das eine oder das andere Messsignal einen Impuls zeigt oder beide oder keines - und aus der Abfolge dieser Phasen kann eindeutig die aktuelle Drehrichtung erkannt werden.

Für eine derartige Anordnung müssen nicht zwei verschiedene Referenzkörper oder -magneten verwendet werden, sondern es genügt, wenn zwei gleichartige Sensoren um einen Zentrumswinkel von 90° gegeneinander versetzt sind, so dass die Sensorsignale phasenverschoben sind. Bereits ein einziger derartiger Referenzkörper von etwa der halben Umfangserstreckung kann für viele Anwendungsfälle eine für die Erfindung im Allgemeinen ausreichende Genauigkeit liefern, weil damit jede volle Umdrehung der Schneckenwelle erkannt wird. Eine eingängige Schnecke dreht sich einmal vollständig um ihre Achse, während der verzahnte Anschlussring sich um genau einen Zahn weiterbewegt.

Bei einer solchen eingängigen Schnecke ist also das Untersetzungsverhältnis $ü = n_A/n_S = 1/z$, wobei $n_A$ die Drehzahl des verzahnten Anschlusselements ist, $n_S$ bedeutet die Drehzahl der Schnecke, und $z$ ist die Anzahl der Zähne des verzahnten Anschlusselements. Die Drehzahl $n_S$ der Schnecke ist also gleich der Drehzahl des verzahnten Anschlusselements, multipliziert mit dessen Zähnezahl:

$$n_S = n_A \ ^* \ z.$$

Daher genügt im Allgemeinen die drehrichtungsabhängige Zählung der Umdrehungen der Schneckenwelle, also bei Vorwärtslauf positiv, bei Rückwärtslauf negativ, um zu erkennen, welcher Zahn sich gerade in Eingriff mit der Schnecke befindet, also die Drehmomentübertragung von der Schneckenwelle gerade leistet. Dabei ergibt sich die beteiligte Zahnflanke - also die in Drehrichtung vordere oder hintere - weniger aus einer noch genaueren Betrachtung des Drehwinkels, sondern vor allem aus der Richtung des übertragenen Drehmoments, weil jede Zahnflanke nur Druckkräfte übertragen kann.

Obzwar Magneten Kräfte ausüben, heben sich die daraus resultierenden Wirkungen im Verlaufe einer kontinuierlichen Drehung auf - ein Magnet wirkt bei Annäherung ferromagnetischen Materials anziehend in Beschleunigungsrichtung, bei anschließender Passage und Entfernung desselben anziehend in Verzögerungsrichtung. Außerdem sind diese Kräfte im Verhältnis zu den ansonsten auftretenden Kräften im Schwenktrieb vernachlässigbar gering.

Weniger aus Gründen der Genauigkeit, sondern eher zur Vermeidung von Unwuchten können anstelle eines einzigen magnetischen oder metallischen Referenzkörpers auch zwei oder drei oder vier oder noch mehr derartige Referenzkörper verwendet werden - im allgemeinen k Referenzkörper, wobei jeder Referenzkörper sich über einen Winkel von etwa 136°/k erstrecken sollte, bei k = 2 also bspw. über 90°, und wobei benachbarte Referenzkörper um einen ebensolchen Winkel von etwa 136°/k gegeneinander versetzt angeordnet sein sollten. Für alle k ≥ 2 ist eine derartige Anordnung näherungsweise ausgewuchtet; gleichzeitig vervielfältigt sich die Ablesegenauigkeit auf den k-fachen Wert, was vor allem bei häufig reversierenden Drehbewegungen wichtig ist, um den gesamten Überrollungsgrad möglichst genau bestimmen zu können. Denn schwankt bei einer Sensoranordnung mit k = 1 die Schneckenwelle um einen Winkel von weniger als 90° und überschreitet damit keine von dem Sensor überwachte Phasengrenze, so nimmt dieser solche kleine Bewegungen überhaupt nicht wahr, zählt sie also nicht. Bei k = 2 liegen die überwachten Phasengrenzen der Sensoranordnung in Abständen von 45°, bei k = 3 in Abständen von 30°, allgemein bei 90°/k.

Ferner bewegt sich bei mehrgängigen Schnecken mit der Gangzahl g≥ 2 das verzahnte Anschlusselement pro Umdrehung der Schnecke um jeweils g Zähne weiter, so dass in diesem Falle eine genauere Erfassung des Drehwinkels ebenfalls vorteilhaft ist, um zu ermitteln, welcher der g Zähne der Schneckenringverzahnung bei einer Umdrehung der Schnecke welche Belastung erfahren hat. Aus diesem Grunde empfiehlt die Erfindung, die Anzahl k der Referenzkörper wenigstens gleich der Gangzahl g der Schnecke zu wählen, oder größer:

$$k \geq g.$$

Eine Referenzmarke an der Schneckenwelle erscheint bei niedrigen Werten von k nicht nötig, weil diese dann kaum Zusatzinformationen liefert. Es wäre aber denkbar, einen solchen, oben beschriebenen Magnet-Sensor mit einem anders gearteten Sensor zu kombinieren, um die Langzeit-Genauigkeit zu verbessern. Es könnte sich hierbei um einen bspw. gleichartigen Sensor am Haupt-Gehäuse des Schneckentriebs handeln, welcher eine Referenzmarke an dem verzahnten Anschlusselement abtastet und somit ein Null-Signal bezogen auf den Drehwinkel des verzahnten Anschlusselements liefert, oder um einen im folgenden wiedergegebenen Sensor mit einer höheren Anzahl k von Referenzmarkierungen am Umfang der Schneckenwelle.

Eine andere Möglichkeit besteht darin, den Sensor als optischen Sensor auszubilden, insbesondere mittels eines für Licht oder Infrarotstrahlung empfindlichen Elements wie einer Photodiode. Die in einem Lichtstrahl enthaltenen Photonen haben keine Ruhemasse und können daher keine makroskopisch wahrnehmbaren Kräfte erzeugen. Die Intensität des Lichtstrahles ist dabei vorzugsweise hoch genug, um trotz des im Schneckengetriebe vorhandenen Schmiermittels oder Fettes eindeutig identifizierbare Messgrößen zu ermitteln.

Ein optischer Sensor kann mit einem Referenzelement zusammenwirken, um dessen Relativbewegung zu erkennen, wobei das Referenzelement vorzugsweise ein an der Schnecke oder Schneckenwelle festgelegtes Element mit wenigstens einem sich hervorhebenden Reflexionsgrad umfasst.

Vorzugsweise wird dabei in oder nahe dem Sensor ein Licht- oder Laserstrahl erzeugt und auf einen Bereich der Schneckenwelle gerichtet, wo sich je nach deren Drehwinkel ein Referenzelement mit wenigstens einem sich hervorhebenden Reflexionsgrad befindet oder nicht. Das dort ggf. reflektierte Licht gelangt auf ein lichtempfindliches Element, beispielsweise eine Photodiode, und löst dort einen messbaren Photostrom aus, während bei weiter gedrehtem Referenzelement das Licht nicht eben nicht zu dem lichtempfindlichen Element reflektiert wird.

Falls bei einer derartigen Anordnung das Referenzelement in Umfangsrichtung hintereinander mehrere, voneinander beabstandete Inkrementalmarkierungen mit einem sich hervorhebenden Reflexionsgrad umfasst, bei einer Umdrehung der Schneckenwelle nicht nur ein einziges Schaltsignal erzeugt werden, sondern eine dem Anzahl der Inkrementalmarkierungen entsprechende Anzahl, beispielsweise 350 oder 1.000. Damit können bereits minimale Umdrehungen zuverlässig und präzise erfasst werden. Entspricht die Breite einer Markierung etwa der Breite des Abstands zwischen zwei benachbarten Markierungen, so umfasst eine Periode des Messsignals jeweils einen Impuls sowie eine etwa ebenso breite Lücke. Werden zwei gleichartige Sensoranordnungen mit gleicher Inkrementalteilung um etwa die halbe Breite einer Markierung gegeneinander versetzt, so gibt es pro Periode vier voneinander unterscheidbare Phasen - je nachdem, ob das eine oder das andere Messsignal einen Impuls zeigt oder beide oder keines - und aus der Abfolge dieser Phasen kann eindeutig die aktuelle Drehrichtung erkannt werden.

Sofern dies möglich ist, kann die Auswertungseinrichtung die Drehrichtung der Schnecke oder der Schneckenwelle ermitteln. Bei Magnetsensoren oder bei optischen Sensoren mit nur wenigen Inkrementalmarkierungen kann eine derartige Drehrichtungserkennung die Genauigkeit der folgenden Berechnungen deutlich steigern.

Die Auswertungseinrichtung sollte entsprechend der Drehrichtung der Schnecke oder der Schneckenwelle den absolut zurückgelegten (Dreh-) Winkel ermitteln und aufintegrieren. Nur dieser liefert präzise den von den Wälzkörpern überrollten Weg und erlaubt also eine genaue Vorhersage des zu erwartenden Verschleißes der Wälzkörper und Laufbahnen.

Wie oben bereits angedeutet, kann die Schnecke oder Schneckenwelle axial verschiebbar gelagert sein, um das Schneckengewinde und/oder die Zahnreihe an dem Schneckenrad oder Schneckenring vor Drehmomentstößen zu schützen.

Eine axial bewegliche Schnecke oder Schneckenwelle kann außerdem in axialer Richtung abgefedert sein, beispielsweise mittels wenigstens einer Druckfeder, vorzugsweise mittels wenigstens einer Tellerfeder, insbesondere mittels wenigstens einem Tellerfederpaket. Eine solche Federung setzt ein Drehmoment in eine dazu proportionale, messbare Auslenkung der Schneckenwelle in deren Längsrichtung um.

Dadurch wird es möglich, diese Auslenkung mittels eines (Weg-) Sensors zu erfassen und derart aufzubereiten, dass die Auswertungseinrichtung in die Lage versetzt ist, das Maß der axialen Verschiebung der Schnecke oder der Schneckenwelle zu ermitteln. Daraus kann das aktuell von der Schnecke auf das verzahnte Anschlusselement ausgeübte Drehmoment ermittelt werden, um die Belastung der miteinander kämmenden Elemente zu bestimmen.

Bei einer in beiden Längsrichtungen federnd gelagerten Schneckenwelle besteht ferner die Möglichkeit, dass die Auswertungseinrichtung entsprechend der axialen Verschieberichtung der Schnecke oder der Schneckenwelle den absolut zurückgelegten (Verschiebe-) Weg ermittelt und aufintegriert, als Maß für die Belastung der miteinander kämmenden Elemente und infolgedessen deren zu erwartenden Verschleiß.

Der aufzuintegrierende Wert kann gewichtet werden, so dass eine drehzahl- oder drehmomentartige Überlastung mit einem erhöhten (Proportionalitäts-) Faktor stärker gewichtet wird. Auch könnte der aufzuintegrierende Wert vorzeichenabhängig aufgetrennt werden entsprechend einer Auslenkung der Schneckenwelle aus einer etwa mittigen Nullstellung in beide Axialrichtungen, um die auf unterschiedliche Flanken der Zähne einwirkenden Kräfte unabhängig voneinander zu beurteilen.

Wird die Drehmomentinformation mit der Drehwinkelinformation kombiniert, kann darüber hinaus die Belastung einzelner Zähne der Schneckenradverzahnung ermittelt und bewertet werden, um Überlastungen einzelner Zähne zu erkennen und zu melden. Dies könnte beispielsweise wichtig sein bei Blattlagern für pitchgesteuerte Rotorblätter von Windkraftanlagen, bei welchen das blattseitige Anschlusselemente niemals eine vollständige Umdrehung um 334° ausführt, sondern stets nur in einem Winkelbereich von höchstens etwa 90° verstellt wird. Liegt hier der eingestellte Winkelwert zumeist bei einem bestimmten Winkel von beispielsweise 45°, so werden die bei diesem Winkel mit der Schneckenwelle kämmenden Zähne weit mehr verschlissen als die übrigen Zähne, und trotz geringer Überrollwinkel können einzelne Zähne schnell abgenutzt werden, weil der auf ein Rotorblatt einwirkende Winddruck an dem betreffenden Blattlager hohe Drehmomente hervorrufen kann. Dies zu erkennen, ist ein nicht unbeträchtlicher Vorteil der erfindungsgemäßen Anordnung. Um dies zu ermöglichen, sollte die aufsummierte Anzahl der Inkrementalmarkierungen k aller vorhandener (Winkel-) Sensoren gleich oder größer sein als die Anzahl z der Zähne am Umfang des verzahnten Anschlusselements mal dem Untersetzungsverhältnis $ü = n_A/n_S$, mal der Gangzahl g der Schnecke. Dann können jedem Zahn ein oder mehrere Inkrementalmarkierungen zugeordnet werden. Da gilt $ü = n_A/n_S = 1/z$, folgt daraus wiederum die Gleichung:

$$k > g.$$

Ferner kann ein mit einer einzigen Referenzmarke am Umfang der Schneckenwelle zusammenwirkender Sensor vorhanden sein, um die Anordnungen in Abständen eichen zu können bzw. die Auswirkungen "übersehener" Markierungen zu korrigieren und daraus folgende Messfehler zu minimieren. Beispielsweise könnte ein als Blattlager einer Windkraftanlage eingesetzter Schwenktrieb in windstillen Zeiten zwischenzeitlich kurz die Nullposition anhand der Referenzmarke aufsuchen und sodann die Zählung der Inkrementalmarkierungen von neuem beginnen.

Ein Speicher für den (die) aufintegrierten Wert(e) der Auswerteeinrichtung oder des Auswertesystems stellt bei Bedarf Informationen über den betreffenden Schwenktrieb zur Verfügung. Um einen Überlauf eines Speichers zu vermeiden, können nach bestimmten Zeitabständen Zwischenauswertungen vorgenommen werden, indem die aufgelaufenen Weg- und/oder Winkelwerte durch das betreffende Zeitintervall geteilt werden, um zeitlich gewichtete Mittelwerte zu erhalten. Werden zusätzlich zu diesen Mittelwerten die betreffenden Zeitwerte gespeichert - sofern diese nicht ohnehin konstant sind - so kann das relative Gewicht mehrerer solchermaßen gespeicherter Mittelwerte bei einer späteren Gesamtauswertung berücksichtigt werden.

Es besteht die Möglichkeit, Art, Dauer, Ausmaß und/oder Anzahl drehzahl- oder drehmomentartiger Überlastungen zu speichern, insbesondere deren jeweiliger Maximalwert. Damit lassen sich Aussagen über mögliche Beschädigungen des Schwenktriebs treffen, um - gesondert von dem zu erwartenden Verschleiß - gravierende Funktionsbeeinträchtigungen erkennen zu können.

Eine Schnittstelle erlaubt das Auslesen gespeicherter Informationen. Hierbei kann es sich beispielsweise um eine drahtgebundene Schnittstelle handeln, um eine Funkschnittstelle oder um eine Datenübertragung per Infrarotsignal.

Für einen ununterbrochenen Betrieb des Sensors und der Auswerteeinrichtung bzw. des Auswertesystems sollte die erfindungsgemäße Anordnung wenigstens einen wiederaufladbaren Akku aufweisen, der die erfindungsgemäßen Komponenten ständig mit Hilfsenergie versorgt.

Ein solcher Akku kann über einen Stromanschluss oder über eine Photodiode oder über eine Spule, insbesondere im Rahmen eines Transponders, aufladbar sein.

Ein Gehäuse, welches die Schnecke und das verzahnte Schneckenrad-Anschlusselement bis auf deren Anschlussflächen vollständig umgibt und diese damit äußeren Einflüssen entzieht, ist vorzugsweise mit dem unverzahnten Anschlusselement verbunden oder integriert.

Eine weitere Konstruktionsvorschrift besagt, dass das Gehäuse, ggf. mit Ausnahme eines Ansatzes für die Schnecke, eine rotationssymmetrische, zu der Drehachse des verzahnten Schneckenrad-Anschlusselements konzentrische Gestalt aufweist. Damit können die miteinander kämmenden Elemente vollständig umgeben werden, bei gleichzeitig minimalem Platzbedarf.

Das erfindungsgemäße Verfahren zum Betrieb eines Schneckengetriebes, umfassend eine Schneckenwelle mit einem in den Wellengrundkörper unmittelbar eingeformten oder eingearbeiteten, insbesondere eingeschnittenen Schneckengewinde und ein mit dieser kämmendes Schneckenrad, welches ringförmig ausgebildet ist und mit einem ringförmigen Anschlusselement eines mittenfreien Wälzlagers oder Großwälzlagers integriert ist, dessen zwei ringförmige, zueinander konzentrische Anschlusselemente über eine oder mehrere Reihen von Wälzkörpern drehbeweglich aneinander abgestützt sind und zum Anschluss an zwei gegeneinander verdrehbaren Maschinen- oder Anlagenteilen dienen, wobei der Durchmesser der kleinsten, lichten Öffnung innerhalb beider Anschlusselemente gleich oder größer ist als der halbe Mittenkreisdurchmesser der radial äußersten Wälzkörperreihe der gegeneinander verdrehbaren Anschlusselemente, zeichnet sich durch folgende Verfahrensschritte aus:

a) die Drehung und/oder Axialverschiebung der Schnecke oder Schneckenwelle wird gemessen;
b) optional kann der Messwert für die Drehung und/oder Axialverschiebung der Schnecke oder Schneckenwelle gleichgerichtet werden, falls dies nicht bereits durch die Funktionsweise des Sensors erfolgt ist, und/oder die nachfolgende Auswertung kann abhängig von dem Drehwinkel und/oder abhängig von der Verschiebungs- und/oder Drehrichtung verschiedenen Auswertepfaden zugeordnet werden, um mehrere Parameterwerte zu pflegen;
c) der/die ggf. gleichgerichtete(n) Messwert(e) für die Drehung und/oder Axialverschiebung wird (werden) aufintegriert, und/oder Maximalwerte des (der) Messwerts (-e) werden ermittelt;
d) der (die) Integralwert(e) des (der) ggf. gleichgerichteten Messwertes (-e) für die Drehung und/oder Axialverschiebung wird (werden) gespeichert, und/oder Maximalwerte des (der) Messwerts (-e) wird (werden) gespeichert.

Das besondere dieses Verfahrens ist u.a., dass der Schwenktrieb bzw. das Schneckengetriebe "selbst" - eine eigene Intelligenz, gegebenenfalls durch die Einbringung mindestens eines "intelligenten" Sensors (engl.: "smart sensor") erhält und damit in die Lage versetzt ist, sich selbst zu überwachen, insbesondere um Daten über die Betriebsweise und/ oder über den aktuellen Wartungs- und Verschleißzustand seiner selbst zu sammeln für eine Beurteilung des zwischenzeitlich eingetretenen Verschleißes. Alternativ ist die vorgenannte "Intelligenz" der Überwachung- bzw., Kontrolle in einen (womöglich fernab der Maschine oder Anlage bzw. des Fahrzeugs) lokalisierten Zentral- oder Kontrollrechner ausgelagert.

Die vorgenannten Daten über die Betriebsweise und/ oder über den aktuellen Wartungs- und Verschleißzustand werden vorzugsweise zur Reduzierung des Speicheraufwandes und/ oder der zu übertragenden Datenmengen vorab ausgewertet, beispielsweise sensorintern, um bestimmte betriebstypische Parameter zu spezifizieren, und sodann werden die solchermaßen gewonnenen Informationen gespeichert, zwecks späteren Auslesens durch das Bedienungs- und/oder Wartungspersonal.

Als Sensoren oder Sensorik im Sinne dieser erfinderischen Lehre haben sich dabei insbesondere induktive Näherungsschalter (welche auch als induktive "Initiatoren", induktive Annäherungsschalter oder Näherungssensoren oder als induktive Positionssensoren bezeichnet werden) als vorteilhaft herausgestellt, da mit einem solchen Sensor insbesondere metallische, d.h. elektrisch leitfähige, Objekte sicher und berührungslos erfasst bzw. sensiert werden können. Ein solcher induktiver Näherungsschalter besteht nach dem gängigen Stand der Technik hauptsächlich aus drei Funktionseinheiten: Erstens einem Oszillator, zweitens einer internen Auswerteeinheit und Drittens einer Ausgangsstufe. Sobald an den induktiven Näherungsschalter eine Spannung angelegt wird, beginnt der vorgenannte Oszillator zu schwingen. Das dabei entstehende elektromagnetische Feld wird mittels Ferritkern, in welchem sich die Spule befindet, hin zur aktiven, d.h. hin zur "zu sensierenden" oder zur "zu überwachenden" bzw. zur messtechnisch "zu erfassenden", Fläche gerichtet.

An oder auf dieser Fläche kann ein eigens dafür vorgesehener Referenzkörper angebracht sein. Nähert sich dieser Referenzkörper, welcher beispielsweise als ein Teil der Schnecke oder Schneckenwelle ausgeprägt ist, dem Näherungsschalter, so entzieht dies dem Schwingkreis des Näherungsschalters Energie, worauf dessen Oszillatorspannung sinkt. Eine beispielsweise nachgeschaltete Vergleicher- oder Komparatorstufe detektiert diesen Spannungsabfall und schaltet exakt beim eingestellten Schaltabstand einen Ausgangsverstärker aktiv.

Ein solcher induktiver Näherungsschalter ist im Sinne der Erfindung insbesondere dadurch gekennzeichnet, dass er an seinem Ausgang das schalterähnliche, binäre, Signal "Referenzkörper- bzw. -objekt erkannt/nicht erkannt", zur Verfügung gestellt.

Dieses Signal kann beispielsweise via Feldbus-Schnittstelle oder alternativ via Drahtlosdatenverbindung an das vorgenannte Auswertesystem weitergeleitet werden. In einer weiteren Ausgestaltungsform der vorliegenden Erfindung wird das Signal auch sogleich intern, d.h. in einer gegebenenfalls innerhalb des "intelligenten" Sensors vorhandenen Logik- oder Mikrocontrollerstruktur verarbeitet, sodass nur die resultierenden End-Werte bzw. Messgrößen bzw. Daten an das nachfolgende System weitergeleitet zu werden brauchen.

In einer weiteren Ausgestaltungsform der Erfindung werden als Sensoren bzw. als Sensorik Inkrementalgeber verwendet. Dies können Sensoren entweder zur Erfassung von Lageänderungen (linear) oder von Winkeländerungen (rotierend) sein. So kann folglich sowohl die Lage (Position) als auch die Drehrichtung der Schnecke oder Schneckenwelle sensiert oder erfasst werden.

Als sensierte, d.h. erfasste, Messgrößen, -Signale und -Daten kommen bei Verwendung von derartigen Inkrementalgebern im Sinne der Erfindung zum Einen Wegstrecke und Wegrichtung als auch zum Anderen Winkelveränderung und Drehrichtung der Schnecke oder Schneckenwelle zum Tragen. Solche Inkrementalgeber werden auch als Drehgeber, Inkrementaldrehgeber oder Drehimpulsgeber bezeichnet.

Da derartige Inkrementalgeber nach dem heutigen Stand der Technik müssen - etwa im Gegensatz zu Absolutwertgebern - nach dem Einschalten der Anlage oder Maschine gegebenenfalls referenziert werden müssen, empfiehlt sich auch hier im Sinne der Erfindung die Verwendung von "intelligenten" Sensoren, welche über eine eigene Speichereinheit verfügen, sodass die einmal gelernten Referenz- bzw. Anfahrpunkte nicht mit der Abschaltung der Versorgungsspannung des Inkrementalgeber "verloren".

Um letztgenannten Nachteil zu vermindern, kann die vorliegende Erfindung auch dergestalt weitergebildet werden, als dass anstatt jeweils eines Inkrementalgebers ein Absolutwertgeber verwendet bzw. eingesetzt wird.

Letztlich kann in einer weiteren Ausgestaltungsform der Erfindung sogar kapazitive Näherungsschalter ist ein Näherungsschalter (Sensor), Näherungsinitiator oder Annäherungsschalter eingesetzt bzw. verwendet werden. Auch diese kapazitive Sensoren arbeiten dabei berührungsfrei. Derartige kapazitiven Näherungsinitiatoren sind im aktuellen Stand der Technik als Positionserkenner bei Werkstücken und Werkzeugen sowie in Maschinen verhältnismäßig populär.

Bei manchen Näherungsschaltern sind die Sensoren und Schalter in einem Bauelement vereinigt. Vorteilhaft ist dabei, dass solche kapazitiven Sensoren auch bei nichtmetallischen oder nichtleitenden Werkstoffen reagieren bzw. funktionieren. Im Sinne der vorliegenden Erfindung wird ein solcher kapazitiver Sensor vorgeschlagen, der einen sensorinternen Oszillator aufweist, dessen frequenzbestimmende Kapazität teilweise vom zu detektierenden Medium bzw. der Umgebung gebildet wird. Bei Beeinflussung des Feldes der Sondenkapazität durch einen Nichtleiter beruht die Kapazitätsänderung auf einer Änderung der wirksamen Permittivität im Bereich der Elektroden. Der gemäß der vorliegenden technischen Lehre eingesetzte kapazitive Sensor verfügt idealerweise über eine Kalibriermöglichkeit, beispielsweise in Form eines einstellbaren Potentiometers, um die Empfindlichkeit bzw. die Schaltschwellen an die Einsatzbedingungen anzupassen.

In einer weiteren Ausgestaltungsform der Erfindung lassen sich auch weitere Sensoren an die den erfindungsgemäß vorgesehenen Aufnahme- oder Befestigungsorten des Schwenkantriebs- oder Schneckengetriebesystem an- oder eingebracht werden, beispielsweise Füllstandssensoren zur Ermittlung (und Verifikation bzw. Überprüfung) eines ordnungsgemäßen Schmiermittel- oder Ölzustands innerhalb des Schwenkantriebs- oder Schneckengetriebesystems - oder auch Temperatursensoren zur Ermittlung (und Verifikation bzw. Überprüfung) der herrschenden Betriebstemperaturen innerhalb des, ggfs. unter Last stehenden, Gehäuses oder Gehäuseteils oder auch gar die herrschenden Temperaturen der in unmittelbarer Umgebung der mechanisch in Aktion oder im Eingriff befindlichen Komponenten.

Ebenso können sogar robuste Induktivsensoren zur Positions- und Drehzahlerfassung im Sinne der Erfindung eingesetzt werden, oder auch Hallsensoren zur berührungslosen Drehzahlmessung der Schnecke bzw. Schneckenwelle.

Auch schalterähnliche oder schalterartig wirkende Sensoren, beispielsweise auch Füllstandsschalter zur Ermittlung (und Verifikation bzw. Überprüfung)des Getriebeölstands können in einer weiteren Ausgestaltungsform an die erfindungsgemäß vorgesehenen Aufnahme- oder Befestigungsorte an- oder eingebracht werden.

Robuste Dehnungssensoren auf Basis von Dehn-Mess-Streifen (DMS), beispielsweise, können ebenso an die erfindungsgemäß vorgesehenen Aufnahme - oder Befestigungsorte an- oder eingebracht werden. Damit kann die Last oder Belastung in oder auf mechanischen Teilbereichen oder Komponenten des Schwenkantriebs- oder Schneckengetriebesystem ermittelt (und verifiziert bzw. überprüft werden.

Auch die Verwendung von optischen Sensoren zur Leckageüberwachung ist denkbar und möglich.

Es hat sich - bezogen auf die vorgenannt beschrieben im Sinne der Erfindung einsetzbaren Sensoren - jedenfalls gezeigt, dass betriebswichtige Parameter besonders gut an der Schneckenwelle abgelesen werden können. Denn einerseits ist die Schneckenwelle von einer Reihe von Belastungen des Hauptlagers befreit, beispielsweise von dessen Kippmomenten und Axialkräften, und andererseits ist es hinsichtlich der Hauptbewegung des Schwenktriebs, also dessen Drehbewegung um seine Hauptachse, drehfest an das verzahnte Anschlusselement gekoppelt, kann dessen Drehbewegung also einem Sensor od. dgl. weitgehend unverändert mitteilen.

Darüber hinaus befindet sich an der Schneckenwelle der Antriebsmotor, welchem Leistung zugeführt wird, entweder über Elektrokabel oder über Hydraulikleitungen, und daher bereitet es keine Schwierigkeiten, parallel zu diesen Leitungen auch ein oder mehrere Sensor-Leitungen zu verlegen. Schließlich ist der die Schnecke aufnehmend Teil des Gehäuses gegenüber dem restlichen Gehäuseteil stark exponiert und daher für Wartungs- und/oder Reparaturzwecke gut zugänglich, so dass ein defekter Sensor nötigenfalls ausgetauscht werden kann, ohne das Gehäuse des Schwenktriebs zu demontieren, was nicht ohne vorherige Demontage wenigstens eines angebauten Maschinen- oder Anlagenteils möglich wäre. Vielmehr kann ein Sensor entweder direkt aus dem Gehäuse heraus geschraubt werden, oder schlimmstenfalls wäre jener nach Demontage eines stirnseitigen Deckels des Schneckengehäuses des Schwenktriebs sogar von innen her zugänglich, bspw. um dessen korrekte Interaktion mit einem Referenzkörper oder -objekt an der Schneckenwelle zu prüfen oder einzustellen. Hierfür hat es sich bewährt, wenn Sensor(en) und/oder Referenzkörper oder -objekt(e) im Bereich der dem Antriebsmotor abgewandten Stirnseite des Schneckengehäuses angeordnet ist. Die Anordnung im Bereich der Schneckenwelle hat den weiteren Vorteil, dass diese sich aufgrund der Untersetzung eines Schneckentriebs schneller dreht als das verzahnte Anschlusselement. Bei einer eingängigen Schnecke, was im Maschinenbau die Regel darstellt, dreht sich die Schnecke einmal vollständig um ihre Achse, während der verzahnte Schneckenring dabei sich nur um gerade einen Zahn weiterbewegt. Bei einer solchen eingängigen Schnecke ist also das Untersetzungsverhältnis $ü = n_A/n_S = 1/z$, wobei $n_A$ die Drehzahl des verzahnten Anschlusselements ist, $n_S$ bedeutet die Drehzahl der Schnecke, und z ist die Anzahl der Zähne des verzahnten Anschlusselements. Die Drehzahl $n_S$ der Schnecke ist also gleich der Drehzahl des verzahnten Anschlusselements, multipliziert mit dessen Zähnezahl:

$$n_S = n_A \cdot z.$$

Man muss also nur eine ganze Umdrehung der Schneckenwelle betrachten, um zu erkennen, was einem einzelnen Zahn des verzahnten Anschlusselements widerfährt.

Dabei ergibt sich die beteiligte Zahnflanke - also die in Drehrichtung vordere oder hintere - weniger aus einer genauen Betrachtung des Drehwinkels, sondern vor allem aus der Richtung des übertragenen Drehmoments, weil jede Zahnflanke nur Druckkräfte übertragen kann. Deshalb ist es vorteilhaft, die Richtung des Drehmoments zu kennen. Diese Information kann insbesondere bei einer in axialer Richtung begrenzt beweglich gelagerten und durch Federkräfte zentrierten Schnecke durch Beobachtung ihrer Axialverschiebung gewonnen werden.

Denn während der Drehmomentübertragung erfährt die Schnecke eine Axialkraft in der einen oder anderen Längsrichtung und weicht daher aufgrund ihrer federnden Abstützung in eben dieser Richtung aus ihrem Nullpunkt aus. Aus der Richtung dieser Auslenkung kann man also die beteiligte Zahnflanke des betreffenden Zahns ermitteln, und gleichzeitig aus der Amplitude der axialen Auslenkung der Schnecke die auf die betreffende Zahnflanke gerade einwirkende Kraft, so dass die Belastung einzelner Zahnflanken hinsichtlich der Höhe und Dauer präzise dokumentiert werden kann, um Schäden der Verzahnung aufgrund von Überlastungen abzuschätzen; ferner kann die Belastung auch zeitlich aufintegriert werden, um den voraussichtlich eingetretenen Verschleiß der Verzahnung abzuschätzen. Außerdem kann aus dem gesamten, drehrichtungsunabhängig zurückgelegten Drehwinkel der Schnecke auch der gesamte, drehrichtungsunabhängig zurückgelegte Drehwinkel der Hauptlagerung ermittelt werden, woraus sich ein Maß für den Verschleiß der Wälzlagerung(en), also der Wälzkörper und der Laufbahnen, ermitteln lässt. Aus all diesen Informationen kann ein Techniker - ohne Demontage des Schwenktrieb-Hauptlagers - erkennen, ob der Schwenktrieb Reparaturbedarf, insbesondere einen eventuell vorgezogenen Wartungsbedarf, aufweist oder nicht.

Die Erfindung lässt sich dahingehend weiterbilden, dass anhand eines Messwertes für die Drehung der Schnecke oder Schneckenwelle Informationen über deren gesamten Drehwinkel und/oder die (mittlere) Drehzahl gewonnen werden. Diese Informationen geben Aufschluss über die dynamische Beanspruchung des Schwenktriebs, überwiegend hinsichtlich dessen (Haupt-) Lagerung, insbesondere hinsichtlich des aktuellen Verschleißes der Wälzkörper und Laufbahnen.

Ferner entspricht es der Lehre der Erfindung, dass anhand eines Messwertes für die Axialverschiebung der Schnecke oder Schneckenwelle Informationen über deren gesamte oder mittlere Drehmomentbelastung gewonnen werden. Auch diese Informationen geben Aufschluss über die dynamische Beanspruchung des Schwenktriebs, vorwiegend hinsichtlich der Verzahnung an dessen verzahnten Anschlusselement und/oder der aktuell zu erwartenden Beschaffenheit des Schneckengewindes.

Besonders interessant ist schließlich eine kombinierte Auswertung, wobei das anliegende Drehmoment drehwinkelabhängig aufintegriert wird, um sozusagen für jeden Zahn des verzahnten Anschlusselements "Buch zu führen" und lokale Überlastungen zu erkennen. Eine solche Auswertung ist vor allem bei speziellen Anwendungsfällen vorteilhaft, wenn ein Schneckentrieb nur wenige Bewegungen ausführt, aber gleichzeitig hohen statischen Drehmomentbeiastungen unterworfen ist, wie bspw. Blattlager von Windkraftanlagen oder Nachführungen von Solaranlagen, etc.

In einer sinngemäßen Weiterbildung der Erfindung lässt sich der Einsatz des erfindungsgemäßen Schneckengetriebes aus im Sinne einer Austausch- oder

Retrofit-Einrichtung andenken. Wird die Erfindung in einem solchen Sinne verwendet, eröffnet sich insbesondere zusätzlich der Ersatzteil-Markt für den Absatz der erfindungsgemäßen Vorrichtung.

Dies bedeutet: Das erfindungsgemäße Schneckengetriebe kann beispielsweise als Ersatz-Schwenktrieb für herkömmlich eingesetzte Schwenktriebe, also herkömmliche Schwenktriebe ohne ergänzende Sensorik im Sinne der vorliegenden Erfindung, eingesetzt werden.

In diese Falle bietet sich insbesondere an, dass die vorliegende Erfindung zwar mit der erfindungsgemäßen Sensorik versehen werden kann, jedoch nichts zwangsweise versehen werden muss. Durch alleine die Vorsehung von Befestigungsmöglichkeiten für die vorgenannte Sensorik in oder am Gehäuse des erfindungsgemäßen Schneckengetriebes, bleiben somit Möglichkeiten für den Käufer oder für den Kunden offen, die sinnvolle Sensorik "später" bei Bedarf einfach nachzurüsten.

In diesem Falle wird die vorliegende Erfindung beispielsweise zwar mit entsprechenden Bohrungen zur Anbringung der vorgenannte Sensorik versehen - vor Verlassen der Montagestraße oder vor Verlassen des Werks jedoch werden diese Bohrungen mit wieder entfernbaren Blindstutzen oder Gehäuse-Abdeckungen versehen. Derartige Blindstutzen oder Abdeckungen können vorteilhafterweise aus Kunststoff oder Metall bestehen, gegebenenfalls auch aus mehreren Einzelteilen. Gegebenenfalls sind diese Blindstutzen oder Abdeckungen gegenüber dem Gehäuse des erfindungsgemäßen Schneckengetriebes auch separat mittels Dichtmaterial gegen etwaig eindringende Feuchtigkeit abgedichtet.

In einer sehr speziellen und kostengünstigeren Weiterbildung der Erfindung werden zur Lagerung der Schneckenwelle anstatt der vorgenannten Wälzlager auch Gleitlagerelemente verwendet. Dies hat zwar Nachteile hinsichtlich der Reibung, da Gleitreibung höheren Verschleiß birgt als Wälz- oder Rollreibung, jedoch ergeben sich durch moderne Werkstoffpaarungen zwischen lagerndem Element und gelagertem Element interessante und kostengünstigere Ausführungsformen, da zumeist auf Wälzkörperelemente verzichtet werden kann.

Eine solche Weiterbildung der Erfindung ist insbesondere bei solchen erfindungsgemäßen Schneckengetrieben vorteilhaft, welche nicht permanent drehen. Der Gleitlagerwerkstoff kann dabei aus metallischem, als auch aus nichtmetallischem, Grundwerkstoff bestehen, wobei auch Verbundwerkstoffpaarungen im Sinne der Erfindung sind, solange dabei positive die Gleitreibungseigenschaften vorherrschen.

In einer weiteren, ebenso sehr speziellen, Weiterbildung der Erfindung ist es denkbar und technisch möglich, mehrere Sensoren an oder in das Gehäuse des erfindungsgemäßen Schneckengetriebes zu befestigen, gegebenenfalls wieder lösbar zu befestigen, sodass ein solcher Sensor austauschbar ist.

Sehr speziell ist dabei ebenso die technische Prinziplehre der Erfindung, dass ein solcher (austauschbarer) Sensor, dessen Parameter/ bzw. Messgrößenerfassung nicht axial zur Schneckenwelle, sondern radial zur Schneckenwelle erfolgt und somit senkrecht zur Steigung der Schnecke montiert ist oder montierbar ist, die Drehung der Schneckenwelle als sinusförmige Bewegung erfassen oder sensieren kann. Wird hierbei ein berührungslos arbeitender Sensor oder Messwertgeber verwendet, so "sieht" der beispielsweise fest im Gehäuse eingeschraubte Sensor, dass sich der Abstand des durch den Sensor fixierten Punktes auf der Schneckenwelle zum Sensor sinusförmig verhält. Da diese Sinusform stetig wiederkehrt, lässt sich also durch eine an den Sensor angeschlossene oder anschließbare Elektronik bzw. Auswerteeinrichtung der Sollabstand zwischen dem fixierten Punkt auf der Schneckenwelle und dem Sensor stets vorberechnen.

Weicht der Ist-Abstand zwischen Sensor und dem vom Sensor fixierten Punkt auf der Schneckenwelle von jenem Sollabstand ab, liegt zumindest eine Indikation für ein mögliche Fehlfunktion oder für Verschleiß der mechanischen Komponente vor. Diese mögliche Fehlfunktion oder der mögliche Verschleiß kann elektronisch klassifiziert und ausgewertet werden.

Die technische Lehre der Erfindung beschreibt dabei in einer Vorzugsvariante ein Schwenkantriebs- oder Schneckengetriebesystem zur Installation in einer Anlage bzw. Maschine oder als Baugruppe eines Fahrzeuges, welche mindestens eine Schneckenwelle beinhaltet und wenigstens ein in diese Schneckenwelle eingeformtes oder eingearbeitetes Schraubengewinde.

Mit diesem Schraubengewinde kämmt in der Regel ein ringförmiges Anschlusselement, vorzugsweise ein Schneckenrad, so, dass mindestens über eine in das Schraubengewinde eingreifende Verzahnung mit der Schneckenwelle kämmt.

Dabei ist zu beachten, dass das vorgenannte Anschlusselement durch ein zumindest zweiseitig geschlossenes oder vollgeschlossenes Gehäuse - beispielsweise ein metallisches Guß- oder Schmiedegehäuse - geschützt ist.

Innerhalb dieses Gehäuses ist das Anschlusselement oder Schneckenrad insbesondere mittels Drehverbindung(en) oder Wälzlagerung(en) verdrehbar gelagert.

Mindestens eine Ring- oder Planfläche des Anschlusselementes oder des umgebenden Gehäuses ist vorgesehen, um darin eine oder mehrere benachbarte Anschlusskonstruktion(en) anzubringen.

Dies kann beispielsweise mittels kranzartig angeordneten Verschraubungen des Anschlusselementes an ein mit Befestigungsbohrungen versehenes Maschinen-, Fahrzeug-, oder Anlagenteil erfolgen.

Sehr vorteilhaft ist die vorliegende Erfindung dann im Einsatz, wenn sie in einer Solaranlage zur Relativerstellung der Solarpaneele - oder in einer (Klein)Windenergieanlage zur Verstellung der Rotorblätter oder gar des Turms, oder aber in einem Fahrzeug eingesetzt wird, beispielsweise zur Verdrehung einer Hubarbeitsbühnen-Plattform.

Charakterisiert ist die Vorzugsvariante der vorliegenden Erfindung dadurch, dass die Schneckenwelle jeweils von einem, beispielsweise vom übrigen Gehäuse separierten und eigens dafür vorgesehenen, Gehäuseteil oder Gehäuseabschnitt geschützt ist.

Dieser wobei dieser Gehäuseteil-/ abschnitt verfügt über eine oder mehrere Aufnahme- oder Befestigungsorte für die weiter oben beschriebenen Sensoren oder für dementsprechende Sensorik.

Alternativ weist nicht nur der separierte Gehäuseteil-/ abschnitt, sondern auch das Gehäuse welche das Anschlusselement beinhaltet eine oder mehrere Aufnahme-/ Befestigungsorte für derartige Sensorik auf.

Grundsätzlich dient diese Sensorik zur Erfassung von Messgrößen oder Daten oder Signalen der Schneckenwelle, insbesondere von Überlast- und/ oder Positions- und/oder Lagemessgrößen entlang oder orthogonal zu deren Längsachse.

Alternativ oder sogar zusätzlich zu dieser Detektionsaufgabe kann diese Sensorik zur Erfassung von Überlast- und/ oder Positions- und/ oder Lagemessgrößen des Anschlusselementes - beispielsweise des Schneckenrades - herangezogen werden.

Die Vorzugsvariante der Erfindung eignet sich hervorragend zum Einsatz in einer maschinenbaulichen Anlage oder Maschine - etwa in einer Anlage zur Energieübertragung, insbesondere in einer Kran- oder Schwerlastanlage.

Ebenso zum Einsatz in einer Lastenbeförderungsmaschine, oder sogar zum Einsatz in einer Maschine oder Anlage der Energiewandlung, insbesondere in Form einer Solaranlage oder Windenergieanlage oder gar Gezeitenkraftmaschine.

Selbstverständlich liegt es im Sinne der vorliegenden technischen Lehre, das erfindungsgemäße Schwenkantriebs- oder Schneckengetriebesystem in oder auf einer entsprechenden Fahrzeugbaugruppe einzusetzen, beispielweise auf einem Kran-/ Bagger - oder Schwerlasttransportfahrzeug. Zusätzlich zu diesem Schwenkantriebs- oder Schneckengetriebesystem oder damit direkt verbunden steht ein Zustandserkennungs- und Zustandsüberwachungs-System als Erfindungscharakteristikum.

Dieses Zustandserkennungs- und Zustandsüberwachungs-System übernimmt die Aufgabe, mindestens zeitweisen, gegebenenfalls periodisch, vorzugsweise sogar permanent, Werte (Messgrößen), Signale oder Daten zu erfassen und zu überwachen, welche Messgrößen oder Daten oder Signalen des Schwenkantriebs - oder Schneckengetriebesystems darstellen und/ oder in diesem Schwenkantriebs - oder Schneckengetriebesystems erzeugt werden.

Sinn und Zweck dieser Erfassung und Überwachung ist die verschleissbasierte und wartungsoptimierte Ermittlung von Wartungsintervallen. Letzteres wird gewährleistet durch mindestens einen an das Schwenkantriebs- oder Schneckengetriebesystem eingebrachten oder anbringbaren Sensor der vorgenannten Klassen.

Dabei ist jeder dieser Sensoren mittelbar oder unmittelbar an oder in einem Aufnahme-/ Befestigungsort in oder an dem Gehäuse oder einem Gehäuseteil-/abschnitt befestigt oder montiert. Eine einfache und pragmatische Lösung dieser Befestigung ist dabei das Einbringen eines solchen Sensors in eigens dafür vorgesehenen und eingebrachten Bohrungen.

Damit die Sensoren ihre erfassten bzw. sensierten Informationen weitergeben können, sind diese durch einen jeweiligen Ausgangsanschluss mit dem Zustandserkennungs- und Zustandüberwachungs- System verbunden.

Die über diesen Ausgangsanschluss übertragenen Messgrößen und/ oder Daten und/ oder Signale der Sensoren betreffen regulär Überlast und/ oder Positions- und/ oder Lageinformationen von Schneckenwelle und/ oder Schneckenrad, mittels welchen das Zustandserkennungs- und Zustandüberwachungs- System den Wartungs- und/ oder Verschleißzustandes des Schwenkantriebs- oder Schneckengetriebesystems auf elektronischem Wege erfassen kann.

Mindestens einer der Sensoren ermöglicht die Übermittlung bzw. Übertragung der Messgrößen und/ oder Daten und/ oder Signale unter Nutzung paralleler oder serieller Datenübertragungstechnik. Informationsquelle ist dabei in der Regel der Sensor. Informationssenke ist dabei in der Regel mindestens ein, vorzugsweise elektronisch arbeitendes oder zumindest computergestütztes Auswertesystem.

In einer vorteilhaften Ausgestaltung der Erfindung erfolgt die Kommunikation, also der Austausch von Informationen, zwischen Sensor(en) und Auswertesystem(en) bidirektional, sodass sowohl Sensor(en) als auch Auswertesystem(e) zeitweise Informationsquelle oder Informationssenke sein können.

Dabei erfolgt die Kommunikation im Rahmen der Erfindung, also der Austausch von Informationen im Allgemeinen, vorzugsweise unter Nutzung elektrischer Leitungen wie beispielsweise diskreter (sogenannter "hartverdrahteter") Leitungen oder unter Nutzung von Netzwerkleitungen oder Busleitungen. Alternativ dazu erfolgt also in einer weiteren Erfindungsausprägung die Kommunikation, also der Austausch von Informationen, unter Nutzung von mindestens eines Feldbussystems wie $I^2C$-Bus oder LIN-Bus oder Ethernet-Bus oder Profibus oder USB-Bus oder FireWire-Bus oder CAN/CANopen-Bus oder MOST-Bus oder dergleichen.

Eine andere, weitere, Alternative stellt Kommunikation, also der Austausch von Informationen, mittels drahtloser Übertragungstechnologie oder Drahtlosverbindung(en) dar. Eine solche drahtlose Übertragungstechnologie gemäß genügt beispielsweise den allgemeinen IEEE 802.11 - Standards. Im Sinne der Erfindung ist grundsätzlich ebenso die Kommunikation in einem RFID-, oder Bluetooth-, oder Infrarot-, oder WPAN-, oder GSM-, oder UMTS-Drahtlosnetzwerk.

Vorteilhaft ist die Erfindung besonders dann, wenn mindestens einer der Sensoren als sogenannter "intelligenter" Sensor (engl.: "smart sensor") ausgestaltet ist, vorzugsweise welcher neben der eigentlichen Messgrößenerfassung auch Signalaufbereitungsvorrichtungen und Signalverarbeitungsvorrichtungen in einem Gehäuse vereinigt. Vorzugsweise existiert ebenso im selben Gehäuse ein eigener bzw. integrierter Mikroprozessor oder Mikrocontroller.

Solche intelligenten Sensoren weisen allerdings mindestens eigene Speichervorrichtung sowie eine Datenschnittstelle, vorzugsweise zur parallelen oder seriellen Datenübertragung bzw. Kommunikation, auf.

Grundsätzlich liegt im Sinne der Erfindung, dass mindestens ein Sensor direkt oder indirekt an das Schwenkantriebs- oder Schneckengetriebesystem an- oder eingebracht wird - oder zumindest an- oder eingebracht werden kann - beispielsweise mittels eigens für jenen Sensor eingebrachte Bohrung(en).

Gegebenenfalls ist die Zuhilfenahme von weiteren Haltevorrichtungen wie zum Beispiel Installations- und Montage/ oder Halteblechen vorteilhaft um den Sensor oder die Sensoren sicher, geschützt und dennoch gut zugänglich an das Schwenkantriebs- oder Schneckengetriebesystem an- oder einzubringen.

Der Sensor oder die Sensoren können eventuell separat von der Außenwelt gesichert sein durch ein entsprechendes Sensorikschutzgehäuse, beispielsweise in Form eines aus Blech oder Gussmetall bestehenden Hohlkörpers. Vorteilhaft ist dabei natürlich, wenn jenes Sensorikschutzgehäuse eine Schwenkantriebs- oder Schneckengetriebesystems-seitige Öffnung aufweist, und ferner in geeigneter Weise mit dem Gehäuse oder Gehäuseteil des Schwenkantriebs- oder Schneckengetriebesystems verbunden werden kann - beispielsweise verschraubt oder verschweißt werden kann.

Mit dem Schwenkantriebs- oder Schneckengetriebesystem gekoppelt oder verbunden ist idealerweise das Zustandserkennungs- und Zustandsüberwachungs-System und/ oder mindestens ein IT- und Elektroniksystem und/ oder mindestens eine Wissensdatenbank aufweist oder beinhaltet.

Alternativ ist das Schwenkantriebs- oder Schneckengetriebesystem direkt mit einer Wissensdatenbank werte-, signal- oder datentechnisch verbunden, welche auch extern, also räumlich bzw. örtlich von dem Schwenkantriebs- oder Schneckengetriebesystem entfernt lokalisiert sein kann. Eine andere Alternative sieht vor, dass das Schwenkantriebs- oder Schneckengetriebesystem direkt mit einem IT- und Elektroniksystem werte-, signal- oder datentechnisch verbunden ist, welche auch extern, also räumlich bzw. örtlich von dem Schwenkantriebs- oder Schneckengetriebesystem entfernt lokalisiert sein kann. Jedenfalls weist die vorgenannte Wissensdatenbank sogenannte "Erfahrungsdaten", wie etwa Schwell - oder Grenzwerte, auf. Im Regelfalle sind diese in einem entsprechenden Speicherbereich innerhalb der Wissensdatenbank abgelegt und/ oder gespeichert. Vorzugsweise weist die vorgenannte Wissensdatenbank auch Kennfelder und bekannte Betriebsmuster auf, gegebenenfalls die je eine Abfolge oder Funktion mehrerer vorgenannter Schwell- oder Grenzwerte abbilden.

Es liegt im speziellen Erfindungssinne, dass idealerweise einige Untermenge dieser (speziellen) Kennfelder und bekannten Betriebsmuster analytische Abfolgen oder mathematische Funktionen von verschleissindizierenden oder verschleissanzeigenden Betriebsmustern darstellen oder kennzeichnen. Solche verschleiss-indizierenden oder verschleissanzeigenden Betriebsmuster, nachfolgend beispielhaft bezeichnet als eine Funktion:

$$\text{SAMPLE\_}_{krit\ i} = f \text{ (verschleissindizierendes oder verschleissanzeigendes Betriebsmuster)}$$

können, bezogen auf ein Schwenkantriebs- oder Schneckengetriebesystem, beispielsweise, aber nicht beschränkt auf, die folgenden verschleiss-indizierenden oder verschleissanzeigenden Merkmale kennzeichnen:

$$\text{SAMPLE\_}_{krit\ i} = f \text{ (allgemeiner Verschleiß des Lagers) ,}$$
$$\text{SAMPLE\_}_{krit\ i+1} = f \text{ (rauer Lagerlauf) ,}$$
$$\text{SAMPLE\_}_{krit\ i+2} = f \text{ (Späne im Lager) ,}$$
$$\text{SAMPLE\_}_{krit\ i+3} = f \text{ (zu wenig Schmiermittel) ,}$$
$$\text{SAMPLE\_}_{krit\ i+4} = f \text{ (Rissbildung im Laufbahnsystem) ,}$$
$$\text{SAMPLE\_}_{krit\ i+5} = f \text{ (Rissbildung im Lagersystem) ,}$$
$$\text{SAMPLE\_}_{krit\ i+6} = f \text{ (Pittingbildung im Laufbahnsystem) ,}$$
$$\text{SAMPLE\_}_{krit\ i+7} = f \text{ (Lagerfraß oder Lagerfestsetzung) ,}$$
$$\text{SAMPLE\_}_{krit\ i+8} = f \text{ (mechanischer Kantenausbruch an Verzahnung oder Schneckenrad) ,}$$
$$\text{SAMPLE\_}_{krit\ i+9} = f \text{ (mechanische Lagerdeformation) ,}$$
$$\text{SAMPLE\_}_{krit\ i+10} = f \text{ (Deformation der Schnecke oder Schneckenwelle) ,}$$

$\text{SAMPLE}_{\text{krit i+11}}$ = f (Wälzkörperbeschädigung im Laufbahnsystem) ,

$\text{SAMPLE}_{\text{krit i+12}}$ = f (Wälzkörperverlust im Laufbahnsystem) ,

$\text{SAMPLE}_{\text{krit i+13}}$= f (Schmiermittelüberalterung) ,

$\text{SAMPLE}_{\text{krit i+14}}$= f (Deformation der Anschlusskonstruktion oder des Schneckenrades) ,

$\text{SAMPLE}_{\text{krit i+15}}$= f (erhöhter Eisengehalt im Schmiermittel) ,

$\text{SAMPLE}_{\text{krit i+16}}$ = f (Verringerung der Schraubenvorspannung an Anschlusskonstruktion) ,

$\text{SAMPLE}_{\text{krit i+17}}$ = f (Verlust der Schraubenvorspannung an Anschlusskonstruktion) ,

$\text{SAMPLE}_{\text{krit i+18}}$= f (elastische Verformung des Laufbahnsystems) ,

$\text{SAMPLE}_{\text{krit i+19}}$= f (Wasser/ Flüssigkeit im Lager oder im Schmiermittel) ,

$\text{SAMPLE}_{\text{krit i+20}}$= f (Grübchen oder Riefenbildung im Laufbahnsystem) ,

$\text{SAMPLE}_{\text{krit i+21}}$ = f (Dichtungsleckage) ,

$\text{SAMPLE}_{\text{kriti+22}}$ = f (Verklemmung der Dichtung im Laufbahnsystem) ,

$\text{SAMPLE}_{\text{krit i+23}}$= f (Bruch der Verzahnung der Schnecke oder des Schneckenwelle) ,

$\text{SAMPLE}_{\text{krit i+24}}$ = f (Bruch der Verzahnung des Schneckenrads) ,

$\text{SAMPLE}_{\text{krit i+25}}$ = f (Erhöhter Druck im Lager oder Gehäuse) ,

$\text{SAMPLE}_{\text{krit i+26}}$ = f (Verringerter Druck im Lager oder Gehäuse) ,

$\text{SAMPLE}_{\text{krit i+27}}$= f (Übertemperatur im Lager oder Gehäuse) ,

$\text{SAMPLE}_{\text{krit i+28}}$ = f (Untertemperatur im Lager oder Gehäuse) ,

$\text{SAMPLE}_{\text{krit i+29}}$ = f (Abnutzungsbruch des Lagers),

$\text{SAMPLE}_{\text{krit i+30}}$ = f (falsches Öl oder Schmiermittel im Lager oder Gehäuse),

$\text{SAMPLE}_{\text{krit i+31}}$ = f (Festsetzung oder Verkeilung der Schnecke oder Schneckenwelle),

$\text{SAMPLE}_{\text{krit i+32}}$ = f (Festsetzung oder Verkeilung des Schneckenrades),

$\text{SAMPLE}_{\text{krit i+33}}$ = f (Dislokation/ Fehlpositionierung der Schnecke oder Schneckenwelle),

$\text{SAMPLE}_{\text{krit i+34}}$ = f (Dislokation/ Fehlpositionierung des Schneckenrades),

$\text{SAMPLE}_{\text{krit i+35}}$ = f (Spannungsüberhöhung im Gehäuse),

$\text{SAMPLE}_{\text{krit i+36}}$ = f (keine Bewegung der Schnecke oder Schneckenwelle trotz Motoransteuerung),

$\text{SAMPLE}_{\text{krit i+37}}$ = f (falsche Bewegung der Schnecke oder Schneckenwelle bei Motoransteuerung),

$\text{SAMPLE}_{\text{krit i+38}}$ = f (mech. Beschädigung des Schnecken- oder Schneckenwellenlagers),

$\text{SAMPLE}_{\text{krit i+39}}$ = f (Fehlfunktion des Schnecken- oder Schneckenwellenlagers),

$\text{SAMPLE}_{\text{krit i+40}}$= f (Fehlfunktion der Permanent- oder Anbaubremse), et cetera.

In einer weiterführenden Ausgestaltung der Erfindung verfügen die in Verbindung mit dem Schwenkantriebs- oder Schneckengetriebesystem verwendeten Sensoren über Diagnosefunktionalitäten, insbesondere zur Eigen- oder Selbstdiagnose, beispielsweise zur standardmäßigen Diagnose:

a.) des Minimalwertes einer erfassbaren Messgröße bzw. Datums bzw. Signals (33) (sog.: "Min."-Diagnose)
b.) des Maximalwertes einer erfassbaren Messgröße bzw. Datums bzw. Signals (33) (sog.: "Max."-Diagnose)
c.) Vorhanden- oder Nichtvorhandsein einer Messgröße bzw. Datums bzw. Signals (33) (sog.: "Sig."-Diagnose)
d.) Plausibilität einer erfassbaren Messgröße bzw. Datums bzw. Signals (33) (sog.: "Plaus."-Diagnose)

Mindestens ein Sensor der gesamten Sensorik ist beispielsweise direkt in das Gehäuse des Schwenkantriebs- oder Schneckengetriebesystem über eine Bohrung eingebracht. Dabei kann ein solcher Sensor direkt räumlich bzw. örtlich benachbart zu einer Auswerteeinrichtung bzw. zu dem (Sensor-) Auswertesystem lokalisiert sein. Beide Komponenten können idealerweise vom selben, d.h. gemeinsamen, Schutzgehäuse umgeben sein

Ein solches Schutzgehäuse wird idealerweise an dem Gehäuse oder an einen Gehäuseteil des Schwenkantriebs- oder Schneckengetriebesystem beispielsweise angeflanscht und mittels Befestigungsschrauben verschraubt. Selbstverständlich ist auch eine nicht-lösbare Verbindung möglich, beispielsweise eine Schweißverbindung mit dem Gehäuse oder dem Gehäuseteil.

Die Lehre der Erfindung behandelt neben dem vorgenannten Auswertesystem ebenso das vorgenannte IT- und Elektroniksystem welches ebenfalls elektronisch oder zumindest computergestützt arbeitet und werte-, signal- oder datentechnisch mit einem Zentral- oder Kontrollrechner verbunden ist oder verbunden sein kann.

In diesem Zentral- oder Kontrollrechner, welcher räumlich getrennt von dem Schwenkantriebs- oder Schneckengetriebesystem oder gar räumlich getrennt von der mit Sensorik ausgestatteten Maschine oder Anlage oder der Fahrzeugbaugruppe angebracht ist, werden die durch Sensorik gewonnenen Messgrößen und/ oder Daten und/ oder Signale mit vorgenannten Erfahrungsdaten wie etwa Schwell- oder Grenzwerten verglichen werden, insbesondere um verschleissbasierte Wartungsintervalle wartungsoptimiert zu ermitteln.

In einer alternativen Ausprägungsform erfolgt dieser Vergleich nicht nur im Zentral - oder Kontrollrechner, sondern gegebenenfalls im IT- und Elektroniksystem und/ oder in der Wissensdatenbank.

Zurück kommend auf das Schwenkantriebs- oder Schneckengetriebesystem oder damit ausgestattete Anlage bzw. Maschine oder Fahrzeugbaugruppe ist diese jedenfalls dann vorteilhaft ausgeprägt, wenn entlang oder in Richtung der Längsachse - wenigstens einem der beiden längsseitigen Enden der Schnecke oder Schneckenwelle - zumindest ein Antriebsmotor befestigt ist. Über diesen Motor wird rotatorische Energie auf mindestens eine Abtriebswelle im Inneren des Schwenkantriebs- oder Schneckengetriebesystem übertragen.

Dieser Antriebsmotor ist vorzugsweise eine Elektromaschine oder ein E-Motor, alternativ ein Hydraulikmotor oder Ölpumpe.

Am gegenüberliegenden Ende zum Antriebsmotor ist, gegebenenfalls unter Zwischenschaltung eines Adapterstücks oder Adapters, ein endseitiger Befestigungsflanschs mit oder ohne eine Bremse befestigt.

Diese Bremse ist entweder ausgeführt als Permanentbremse oder als Haltebremse. Es hat sich als vorteilhaft herausgestellt, dass anstatt einer solchen Bremse ein Potentiometer angebracht sein kann.

Die Schnecke oder Schneckenwelle des Schwenkantriebs- oder Schneckengetriebesystem ist intern, also im Inneren des Gehäuses oder des Gehäuseteils-/ Abschnitts an mindestens einer Stelle entlang des Wellenbereichs gelagert.

Die Lagerung ist dann reibungsminimiert, wenn rotationssymmetrisch zur Längsrichtung oder Längsache mindestens eine mechanisch Wälzlagerung angebracht ist. Alternativ kann auch eine Gleitlagerungsvorrichtung eingesetzt werden.

In einer sehr geschickten Aus- oder Weiterbildung der vorliegenden Erfindung ist das Schwenkantriebs- oder Schneckengetriebesystem nicht nur mit einer Schneckenwelle und mit einem Schneckenrad versehen, sonder das Gehäuse des Schwenkantriebs- oder Schneckengetriebesystems kann mehrere, vorzugsweise zwei, alternativ drei, Schneckenräder und mindestens eine entsprechende Anzahl zugehöriger Schneckenwellen beinhalten oder beherbergen.

Dann kämmt jede dieser Schneckenräder mit mindestens einer separaten Schnecke oder Schneckenwelle, während jede dieser Schneckenwellen über eine eigene Abtriebswelle mit einem Antriebsmotor gekoppelt ist oder gekoppelt werden kann. Diese Antriebsmotore können vorzugsweise unabhängig voneinander betrieben werden, sodass die über die Schneckenwelle initiierte Drehbewegung eines ersten Schneckenrads unabhängig von der Drehbewegung des zweiten oder gar dritten Schneckenrads erfolgt.

Eine solche Vorrichtung ist insbesondere dort vorteilhaft, wo mittels einer Gesamtbaugruppe mehrere Achsen verstellt werden müssen, wie dies beispielsweise bei einer Vielzahl der mehrachsig verstellbaren Solaranlagen gegeben ist. Es hat sich jedoch auch als sehr vorteilhaft herausgestellt, wenn (Klein- )Windenergieanlagen nicht nur in Azimutrichtung, sondern auch orthogonal zu diesem Drehsinne verstellt werden können.

Das Verfahren zum wartungsoptimierten Überwachen eines Schwenkantriebs- oder Schneckengetriebesystem oder der damit ausgestatteten Anlage bzw. Maschinen oder Fahrzeugbaugruppe ist besonders dann vorteilhaft, wenn es mindestens die Drehung und/ oder die Axialverschiebung der gehäuseintern gelagerten Schnecke oder Schneckenwelle misst oder datentechnisch erfasst.

Vorzugsweise wird darüber hinaus ebenso etwaig herrschende Überlast- und/ oder herrschende Fehlpositionierung in der Axialverschiebung dieser Schnecke oder Schneckenwelle entlang oder orthogonal zur Längsachse misst oder datentechnisch erfasst.

Diese Messung oder Erfassung erfolgt, wie oben beschrieben, mittels mindestens eines in dem dafür vorgesehenen Gehäuseteilabschnitt befestigten oder eingebrachten Sensors nach einem der vorgenannten Ausführungsformen.

Um das Schwenkantriebs- oder Schneckengetriebesystem besonders wartungsfreundlich oder wartungsoptimiert zu gestalten, werden dabei,
Erstens, die mittels Sensor oder Sensorik gemessen oder erfassten Messgrößen und/ oder Daten und/ oder Signale für die Drehung der Schnecke oder Schneckenwelle und/ oder für die Axialverschiebung der Schnecke oder Schneckenwelle in Richtung der Längsachse gleichgerichtet.
Dies erfolgt vorzugsweise mittels des vorgenannten Auswertesystems.

Zweitens werden die gleichgerichteten Messgrößen und/ oder Daten und/ oder Signale für die Drehung der Schnecke oder Schneckenwelle und/ oder für die Axialverschiebung der Schnecke oder Schneckenwelle (auf)integriert oder (auf)summiert werden, beispielsweise ebenfalls innerhalb des Auswertesystems. Und, Drittens, werden die so (auf)integrierten oder (auf)summierten Messgrößen und/ oder Daten und/ oder Signale für die Drehung und/oder Axialverschiebung an das vorgenannte Zustandserkennungs- und Zustandsüberwachungs- System übermittelt oder übertragen.

Die weitere Erkennung, beispielsweise die Erkennung etwaig vorhandener Wartungsbedarf oder etwaig vorhandener Fehler, erfolgt gemäß vorgenanntem Vergleich innerhalb des Zustandserkennungs- und Zustandsüberwachungs- System und/ oder innerhalb des IT- und Elektroniksystem und/ oder gegebenenfalls innerhalb eines Zentral- oder Kontrollrechners.

Weitere Merkmale, Einzelheiten, Vorteile und Wirkungen auf der Basis der Erfindung ergeben sich aus der folgenden Beschreibung einer bevorzugten Ausführungsform der Erfindung sowie anhand der Zeichnung. Hierbei zeigt:

Fig. 1      einen beispielhaften Schnitt durch ein erfindungsgemäßes Schneckengetriebe parallel zur Hauptebene des Schneckenrades, teilweise abgebrochen;

Fig. 2      ein Detail aus Fig. 1 in einer vergrößerten Darstellung; sowie

Fig. 3      eine beispielhaft abgewandelte Ausführungsform der Erfindung in einer der Fig. 2 entsprechenden Darstellung, sowie

Fig. 4      eine wiederum beispielhaft abgewandelte Ausführungsform der Erfindung in einer der Fig. 2 entsprechenden Darstellung.

Fig. 5      eine wiederum abgewandelte Ausführungsform der Erfindung, beispielhaft kennzeichnend die möglichen Einbringungs- oder Befestigungsorte (A ; B ; C) für die erfindungsgemäße Sensorik (S) im Gehäuseteil der Schnecke bzw. Schneckenwelle. Im vorgenannt beschriebenen Falle der "Retrofit"- bzw. "Nachrüst"-Anwendung können diese Einbringungs- oder Befestigungsorte mit Blindstutzen oder Abdeckungen versehen werden.

Fig. 6      Beispielhaftes Sinus-Signal, welches von einem Sensor, der im Gehäuse orthogonal zur Längsachse der Schneckenwelle angebracht ist, erfasst wird: Der Abstand des durch den Sensor fixierten Punktes auf der Schneckenwelle zum Sensor verhält sich sinusförmig. Da diese Sinusform stetig wiederkehrt, lässt sich also durch eine an den Sensor angeschlossene oder anschließbare Elektronik bzw. Auswerteeinrichtung der Sollabstand zwischen dem fixierten Punkt auf der Schneckenwelle und dem Sensor stets vorberechnen.

Fig. 7 a    zeigt in schematischer Weise und beispielhaft die Integration des erfindungsgemäßen Schwenktantriebs- oder Schneckengetriebesystems auf einer Fahrzeugbaugruppe - in Zusammenschaltung mit dem wartungsoptimierten Zustandserkennungssystem.

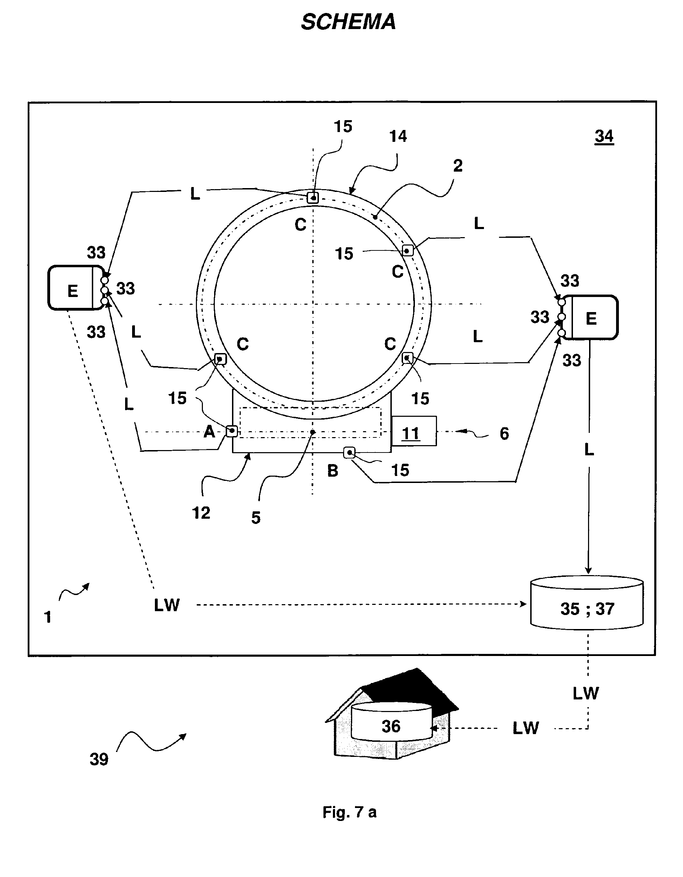

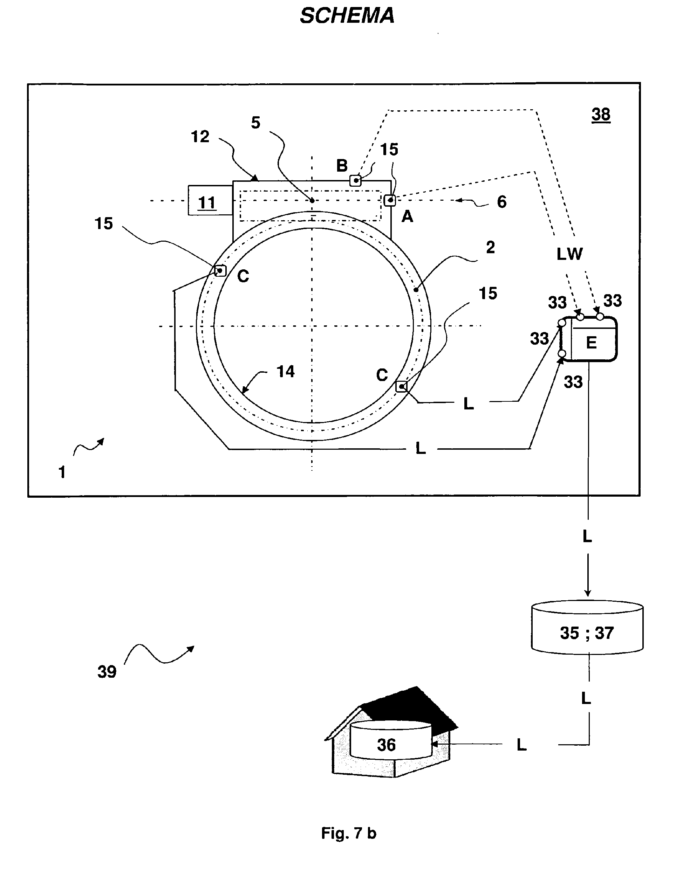

Fig. 7 b    zeigt in schematischer Weise und beispielhaft die Integration des erfindungsgemäßen Schwenktantriebs- oder Schneckengetriebesystems als einer Maschine oder Anlage - in Zusammenschaltung mit dem wartungsoptimierten Zustandserkennungssystem.

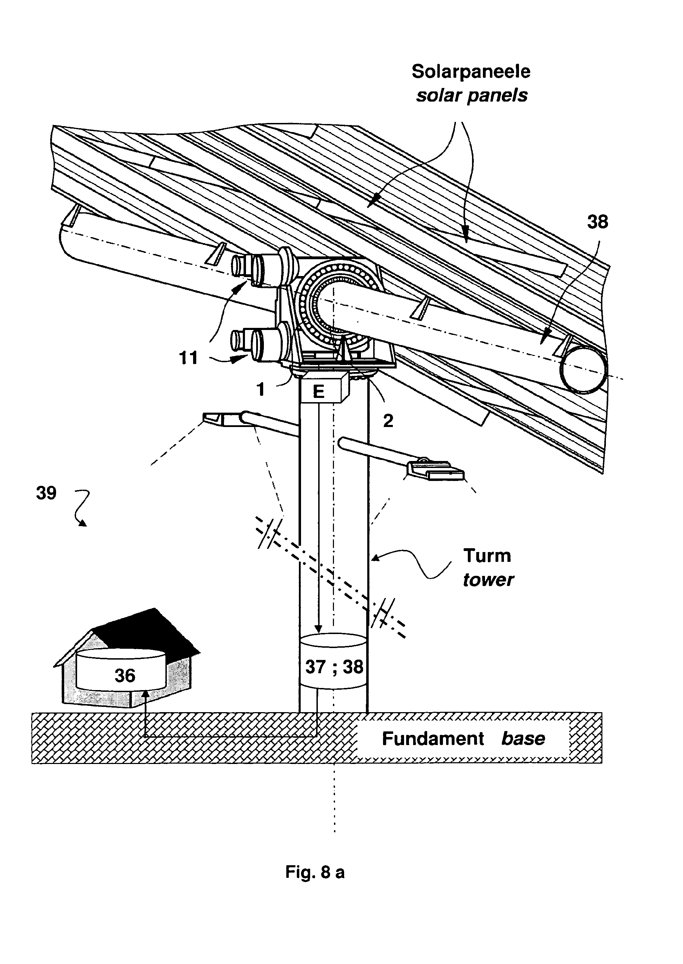

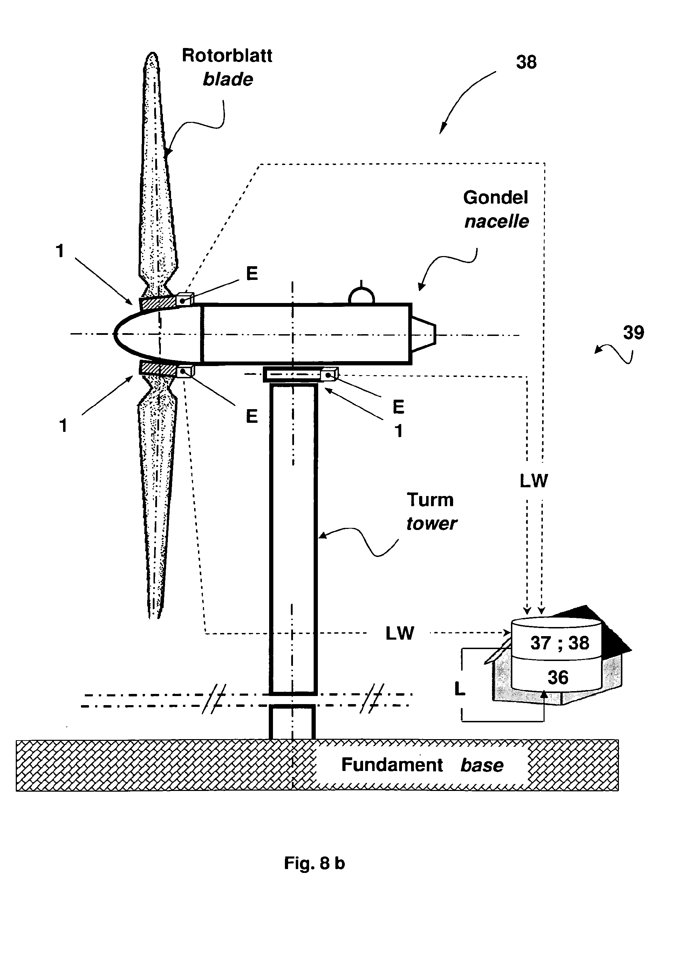

Fig. 8 a    zeigt perspektivisch und beispielhaft die Integration des erfindungsgemäßen Schwenktantriebs- oder Schneckengetriebesystems auf einer Maschine bzw. Anlage, welche z.B. zur Verstellung der Solarpaneele einer Solaranlage dient.

Fig. 8 b    zeigt schematisch und beispielhaft ein weiteres Beispiel zur Integration des erfindungsgemäßen Schwenktantriebs- oder Schneckengetriebesystems auf einer Maschine bzw. Anlage, z.B. einer Windenergieanlage bzw. Kleinwindenergieanlage.

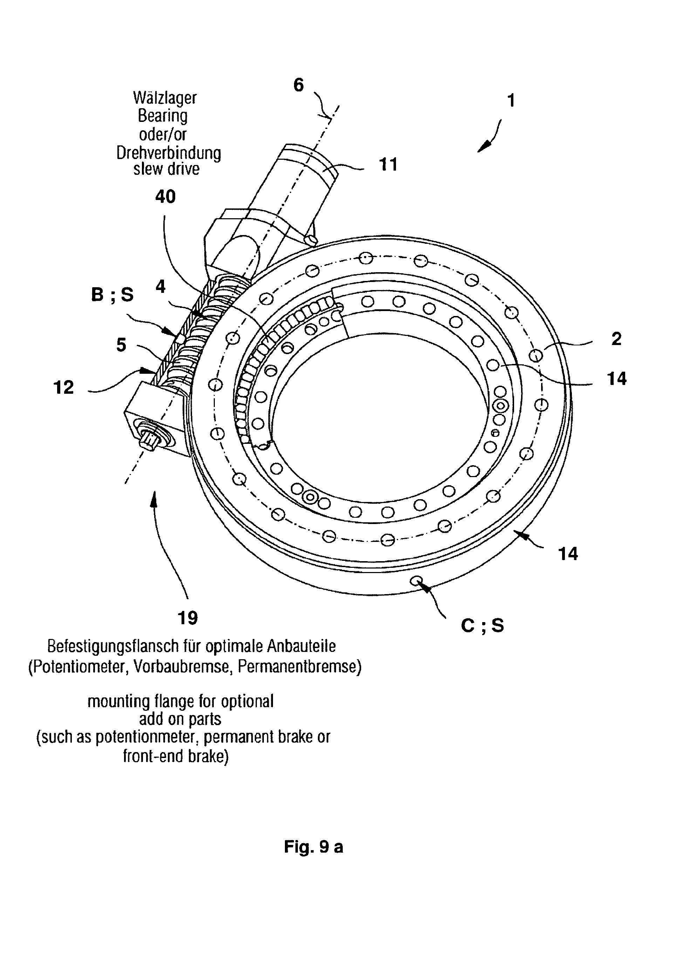

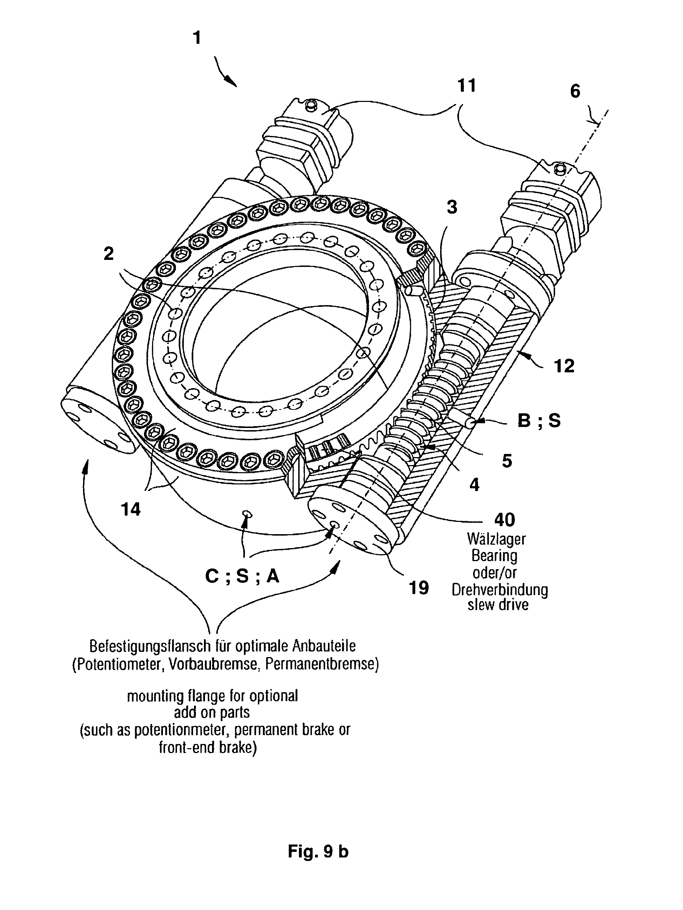

Fig. 9 a    zeigt perspektivisch und beispielhaft das erfindungsgemäße Schwenktantriebs- oder Schneckengetriebesystem in einer leichten Variante, d.h. mit nur einem Antrieb, im Aufriss.

Fig. 9 b    zeigt perspektivisch und beispielhaft das erfindungsgemäße Schwenktantriebs- oder Schneckengetriebesystem in einer schweren Variante, d.h. mit zwei angeschlossenen Antrieben, im Aufriss.

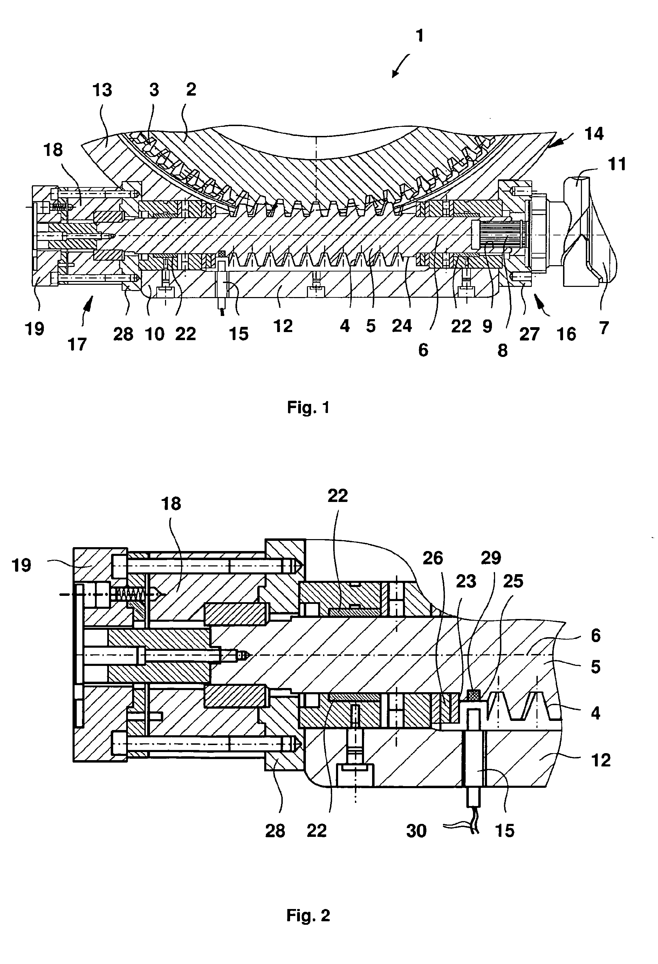

Die in Fig. 1 und 2 wiedergegebene Anordnung zeigt einen abgebrochenen Schnitt entlang der Hauptebene eines erfindungsgemäßen Schwenktriebs (1). Der Schwenktrieb 1 dient dazu, zwei verschiedene Maschinen- oder Anlagebaugruppen um genau eine Achse drehbar, ansonsten aber unverrückbar miteinander zu verbinden.

Jedes dieser zwei verschiedenen Maschinen- oder Anlagebaugruppen wird mit je einem ringförmigen Anschlusselement des Schwenktriebs (1) verbunden, insbesondere durch Verschrauben, von denen in Fig. 1 ein Anschlusselement bzw. Schneckenrad (2) zu sehen ist, welches an seinem Außenumfang eine Verzahnung (3) trägt. Mit der Verzahnung (3) kämmt das Gewinde (4) einer Schnecke oder Schneckenwelle (5) mit einer im Zahneingriffspunkt etwa tangential zu der Verzahnung (3) verlaufenden Längsachse (6), die ansonsten in oder parallel zu der Hauptebene des Schwenktriebs (1) verläuft. Diese Schnecke (5) wird ihrerseits angetrieben von einem Antriebsmotor (7), dessen Abtriebswelle (8) mit der Schnecke (5) drehfest verbindbar ist, insbesondere durch Einstecken in eine stirnseitige Ausnehmung (9) der Schnecke (5).

Als Widerlager dient dem Antriebsmotor (7) ein die Schnecke (5) lagernder Teil (10) des Schwenktriebs (1), woran das Gehäuse (11) des Motors (7) befestigt, insbesondere angeflanscht ist. Vorzugsweise umgibt das Teil (10) die Schnecke (5) als Gehäuse (12) auf deren gesamter Länge, um deren Gewinde (4) vor einer Verunreinigung durch Schmutz und andere Partikel zu schützen.

Der Schwenktrieb (1) weist ein zweites, ringförmiges Anschlusselement auf, welches gegenüber dem ersten, ringförmigen Anschlusselement (2) verdrehbar ist. Da die Anordnung mittenfrei ist, sind die beiden Anschlusselemente (2) über wenigstens eine umlaufende Reihe von Wälzkörpern aneinander gelagert. Diese Lagerung ist derart ausgebildet, dass sie Kippmomente und Axialkräfte zwischen den beiden Anschlusselementen (2) aufnehmen kann, so dass die mit dem verzahnten Anschlusselement (2) kämmende Schneckenwelle (5) nur noch das Drehmoment dieses Anschlusselements (2) spürt, während zwischen den beiden Anschlusselementen (2) auftretende Kippmomente und/oder Axialkräfte von der Schnecke (5) ferngehalten werden.

Für die Anordnung des zweiten, unverzahnten Anschlusselements gibt es wenigstens zwei unterschiedliche Konstruktionsweisen:

Bei einer ersten Ausführungsform liegt das zweite, unverzahnte Anschlusselement radial außerhalb des ersten, verzahnten Anschlusselements (2). Solchenfalls muss (müssen) die Lagerung(en), also die Laufbahnen, in Richtung der Drehachse des Hauptlagers des Schwenktriebs (1) gegenüber der Verzahnung (3) in axialer Richtung versetzt sein, also nach oben und/oder nach unten. In diesem Falle kann das zweite, unverzahnte Anschlusselement als ein Gehäuseteil (13) des Gesamtgehäuses (14) ausgebildet sein, nämlich als ringförmiges Gehäuseteil (13), welches das verzahnte Anschlusselement (2) an dessen Außenseite umgibt. Die Gehäuseteile (10 ; 12 ; 13) sind zu einem einzigen, in sich starren Gehäuse (14) verbunden oder vorzugsweise einstückig integriert.

Bei einer zweiten, nicht dargestellten Ausführungsform liegt das zweite, unverzahnte Anschlusselement radial innerhalb des ersten, verzahnten Anschlusselements (2). Solchenfalls kann (können) die Lagerung(en), also die Laufbahnen, auf Höhe der Verzahnung (3) angeordnet sein, also nach oben und/oder nach unten. In diesem Fall bildet allerdings das zweite, unverzahnte Anschlusselement keinen unmittelbaren Bestandteil des Schwenktrieb- Gesamtgehäuses (14), sondern ist mit dessen ringförmigem Gehäuseteil (13), welches das verzahnte Anschlusselement (2) an dessen Außenseite umgibt, durch eine in einem Abstand zu einer Stirnseite des verzahnten Anschlusselements (2) entlang laufende, ringförmige Platte verbunden. Auch in diesem Fall sind die Gehäuseteile (10 ; 12 ; 13) zu einem einzigen, in sich starren Gehäuse (14) verbunden oder vorzugsweise einstückig hergestellt.

Der die Schnecke (5) umgebende Gehäuseteil (10 ; 12) weist vorzugsweise eine zylindrische Gestalt auf, rotationssymmetrisch bezüglich der Längsachse (6) der Schnecke (5), abgesehen von dem Kontaktbereich mit dem das verzahnte Anschlusselement (2) umgebenden Gehäuseteil (13), wo das Gehäuseteil (12) seine zylindrische Gestalt zugunsten des Gehäuseteils (12) aufgibt.

Das solchermaßen teilweise zylindrische Gehäuseteil (12) für die Schnecke (5) weist zwei stirnseitige Enden (16 ; 17) auf, wobei an dem Ende (16) der Antriebsmotor (7) angeflanscht ist. Das gegenüber liegende Ende (17) kann für den Anschluss einer Bremse oder eines Tachogenerators od. dgl. vorbereitet sein. Zu diesem Zweck kann bspw. ein dortiges Adapterstück (18) vorgesehen sein mit einem an der Schnecke (5) festgeschraubten Distanzkörper und einer definierten Öffnung im Zentrum zur Aufnahme eines Dreh-Anschlusses einer Bremse oder eines Tachogenerators. Der betreffende Adapter (18) kann an seinem peripheren Ende einen ringförmigen, durch eine dünne, lösbare Abdeckplatte verschlossenen Befestigungsflansch (19) aufweisen.

Das Gewinde (4) umgibt die Schnecke (5) nur in deren mittleren Bereich, wo es mit der Verzahnung (3) kämmt; die beiden Endbereiche (20 ; 21) der Schneckenwelle (5) sind glatt bzw. rotationssymmetrisch und dienen u.a. der Lagerung der Schneckenwelle (5) mittels Wälzlagern (22). Ferner kann die Schneckenwelle zwischen ihrem Gewindebereich (4) und den endseitigen Lagerbereichen (22) wenigstens je eine Abstufung (23) aufweisen, derart, dass die peripher daran anschließenden Wellenbereiche (20 ; 21) einen geringeren Durchmesser aufweisen als die proximal der Abstufung (23) liegende Wellenbereich (24 ; 25). Diese Abstufungen (23) stützen sich in Richtung der Längsachse (6) über Tellerfedern (26) oder Tellerfederpakete (26) an je einem Abschlussflansch (27 ; 28) des Gehäuseteils (12) ab, so dass die Schneckenwelle (5) gegenüber dem sie umgebenden Gehäuseteil (12) in Richtung ihrer Längsachse (6) begrenzt verstellbar ist, jedoch in von äußeren Kräften freiem Zustand durch die beiden Tellerfedern (26) oder Tellerfederpakete (26) in einer mittigen Nullposition zentriert wird.

Bei der Ausführungsform nach Fig. 1 und 2 befindet sich auf der Schneckenwelle (5) in einem Wellenbereich (24 ; 25) zwischen dem Gewindeabschnitt (4) und einer benachbarten Abstufung (23), vorzugsweise im Bereich des dem Motor (7) abgewandten Wellenendes (20), eine von der Rotationssymmetrie abweichende Inhomogenität. Diese kann bspw. durch einen rundumlaufenden Einstich oder durch eine etwa radiale Sacklochbohrung in dem Wellenkörper (5) angeordnet sein. Es kann sich hierbei insbesondere um einen Referenzkörper (29) in Form eines kleinen Magneten handeln. Dieser kann entweder nur eine kurze Erstreckung aufweisen, insbesondere wenn er in einer Bohrung aufgenommen ist, oder den Umfang auf einem größeren Winkel umgeben, vorzugsweise um 136°, wenn er in einem rundum laufenden Einstich aufgenommen ist.

Mit diesem Referenzkörper (29) kooperiert wenigstens ein Sensor (15), vorzugsweise ein Magnetsensor wie ein Hallsensor od. dgl., und gibt an seinen Ausgangsanschlüssen (30) jedesmal dann ein Signal ab, wenn sich der Referenzkörper (29) in seiner Nähe befindet. Vorzugsweise gibt es zwei um 90° gegeneinander versetzte Sensoren (15), welche auf den selben Einstich gerichtet sein können. Durch ihren Phasenversatz kann man mit dieser Anordnung nicht nur die auf 136° genaue Position der Schneckenwelle (5) bestimmen, sondern auch die jeweilige Drehrichtung. Die Längserstreckung des Referenzkörpers (29) sollte wenigstens etwa der Länge des gesamten Verstellbereichs der Welle (5) in axialer Richtung entsprechen, damit das Messergebnis nicht unter einer axialen Verschiebung der Welle (5) leidet. Mit dieser Anordnung kann also die Drehposition und -richtung der Schneckenwelle (5) unabhängig von dem übertragenen Drehmoment ermittelt werden.

Ferner kann in der Schneckenwelle (5) wenigstens ein weiterer Einstich, also eine rundum laufende Nut, beispielsweise von rechteckigem oder trapezförmigem, sich zum Nutgrund hin verjüngendem Querschnitt, vorhanden sein, zwecks Abtastung durch andere Sensoren. Diese Nut muss nicht unbedingt einen Magnetkörper aufweisen, sondern kann selbst als Referenzkörper dienen. Natürlich könnten darin auch rundum laufend Magnete angeordnet sein.

Jedoch umgibt dieser zweite Referenzkörper die Schneckenwelle (5) vollständig und auf möglichst homogene Weise. Mit einem solchen Referenzkörper kooperieren vorzugsweise zwei weitere Sensoren, welche jedoch derart angeordnet sind, dass jeder sich über je einer Seitenkante der Nut befindet. Verschiebt sich nun die Schneckenwelle (5) unter dem Einfluss eines auf das verzahnte Anschlusselement (2) zu übertragenden Drehmomentes, so nähert sich damit die in der mittigen Nullposition der Schneckenwelle (5) noch symmetrisch zwischen den beiden Sensoren liegende Nut einem der beiden Sensoren an und entfernt sich gleichzeitig von dem anderen. Daraus folgend wird ein Sensor eine Annäherung und der andere eine Entfernung sensieren und weitermelden. Durch das Ausmaß dieser Verschiebung kann die Axialverschiebung der Schneckenwelle (5) und damit die von dieser aufzubringende Axialkraft, also das an das verzahnte Anschlusselement (2) eingeleitete Drehmoment, ermittelt werden.

Um sich gegenseitig nicht zu beeinflussen, können die Sensoren (15) und Referenzkörper (29) für die Drehposition und -richtung bspw. in dem Bereich (24) der Schneckenwelle (5) angeordnet sein, die Sensoren und Referenzkörper für das Drehmoment an dem Bereich (25) jenseits des Gewindes (4).

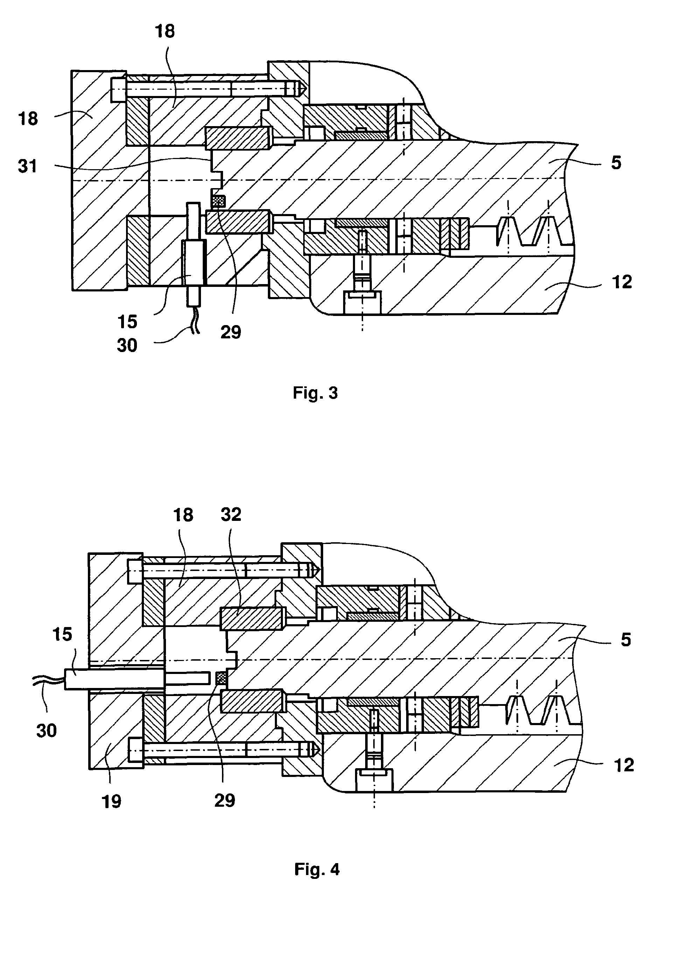

Natürlich sind auch andere Positionen für Sensoren (15) und Referenzkörper (29) für den Drehwinkel und die Drehrichtung einerseits sowie für das Drehmoment andererseits denkbar. So zeigen beispielsweise die Fig. 3 und 4, dass der Referenzkörper (29) auch im Bereich einer Stirnseite (31) der Schneckenwelle (5) angeordnet sein kann, insbesondere an der dem Antriebsmotor (7) abgewandten Stirnseite (31).

Der Referenzkörper kann in die Stirnseite (31) eingelassen sein wie bei Fig. 3 zu sehen oder an jener oberflächig befestigt sein, wie in Fig. 4 zu sehen. Der betreffende Sensor bzw. die betroffene Sensorik (15) kann dann entweder in einem Außenmantel eines dortigen Adapters (18) angeordnet sein, diesen bis zu dem Hohlraum zur Welle (5) hin durchsetzend, wie in Fig. 3 zu sehen, oder der Sensor (15) kann in einem diesen stirnseitig abschließenden Befestigungsflansch (19) befestigt sein, wie in Fig. 4 dargestellt. Dabei können auch in diesen Fällen mehrere Referenzkörper und/oder Referenznuten radial ineinander angeordnet sein, mit entsprechend ausgerichteten Sensoren.

Weitere Orte für die Platzierung von Referenzkörpern (29) und Sensoren (15) für die Drehwinkel, Drehrichtung und/oder Drehmomenterfassung sind denkbar, beispielsweise zwischen Lagerungsstellen (22) und den Hohlraum zwischen der Schneckenwelle (5) einerseits und dem Gehäuse (10 ; 12) andererseits abschließenden Dichtungen (32).

Anhand der Sensorausgangssignale können Informationen über den Zustand des erfindungsgemäßen Schwenk- oder Schneckentriebs (1) gesammelt und bei Bedarf ausgelesen werden. Eine Speicherung und ggf. Vorverarbeitung von

Ausgangssignalen der Sensoren (15) wird von einem Elektronikbaustein oder einer Elektronikschaltung, vorzugsweise einer extern angebrachten Auswertesystem (E) vorgenommen, die in einer weiterführenden Ausgestaltung der Erfindung mit dem erfindungsgemäßen Schwenk- oder Schneckentriebs (1) integriert ist oder an diesem bzw. dessen Gehäuse (12 ; 13; 14) befestigt werden kann, beispielsweise in einem an dem Gehäuse (14) angeschraubten Kästchen.

Es kann sich dabei um ein einfaches Sensorikschutzgehäuse, beispielsweise in Form eines aus Blech oder Gussmetall bestehenden Hohlkörpers mit Schwenkantriebs- oder Schneckengetriebesystemseitiger Öffnung, handeln, der neben der Auswertesystem oder dieser Auswerteschaltung (E) mindestens einen der vorgenannten Sensoren bzw. die gesamte Sensorik (15) beherbergt.

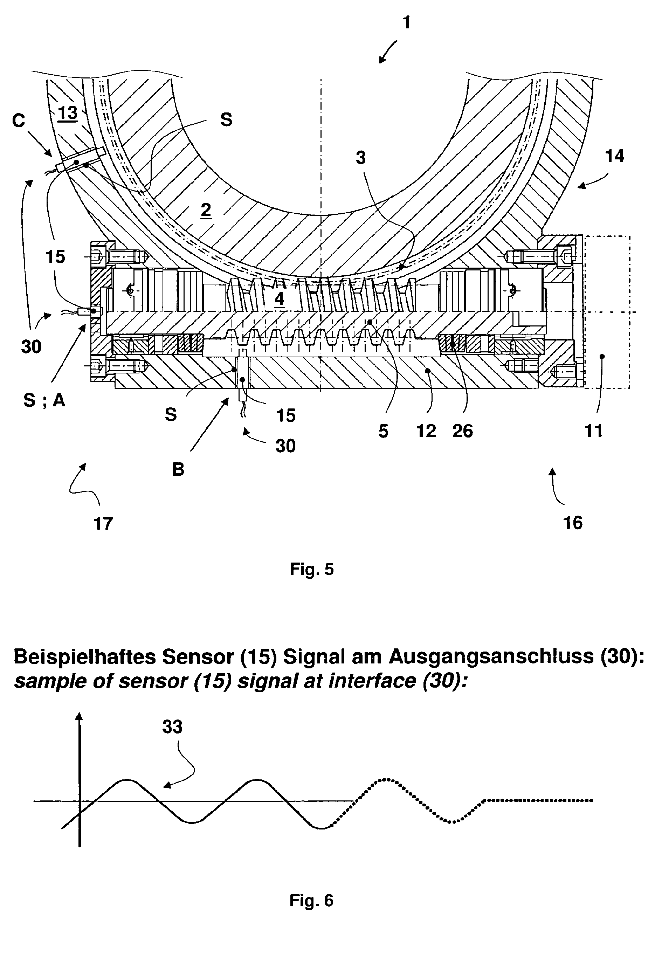

Fig. 5 stellt in ähnlicher Weise wie Fig. 1 einen abgebrochenen Schnitt entlang der Hauptebene eines erfindungsgemäßen Schwenkantriebs- oder Schneckengetriebesystems oder Schwenktriebs dar (1). Mit der Verzahnung (3) kämmt das Gewinde (4) einer Schnecke oder Schneckenwelle (5) mit einer im Zahneingriffspunkt etwa tangential zu der Verzahnung (3) verlaufenden Längsachse (6), die ansonsten in oder parallel zu der Hauptebene des Schwenktriebs (1) verläuft. Diese Schnecke (5) wird ihrerseits angetrieben von einem Antriebsmotor (7), dessen Abtriebswelle (8) mit der Schnecke (5) drehfest verbindbar ist. Gut sichtbar gekennzeichnet sind mehrere Aufnahme - oder Befestigungsorte (A ; B ; C) für Sensoren. Einer dieser Orte (B) liegt dabei orthogonal zur Längsachse (6) gerichtet und dient der Sensierung oder Erfassung der Bewegung der Schnecke (5), sofern in diesen Ort (B) ein entsprechender Sensor (15) eingebracht ist. Ein zweiter dieser Orte (A) liegt dabei in Richtung der Längsachse (6) der Schnecke (5) und dient der Sensierung oder Erfassung der axialen Lage oder Bewegung der Schnecke (5), sofern in diesen Ort (A) ein entsprechender Sensor (15) eingebracht ist.

So dienen letztgenannte beide Sensoren (15) zur Erfassung und Überwachung der Bewegung der Schnecke (5). Um die mittels diesen Sensoren (15) sensierbaren Bewegungswerte der Schnecke (5) zu plausibilisieren, empfiehlt sich die Installation mindestens eines weiteren Sensors (15) am Aufnahmeort (C) im Gehäuse (14). Wenn sich also die Schnecke (5) bewegt, muss - bei korrekter Funktion der Vorrichtung (1) - auch am im Gehäuse (14) eingebrachten Sensor (15) eine Bewegung sensierbar oder erfassbar sein. Ist letzteres nicht gegeben, so liegt ein Fehler vor. Eine entsprechende Wartungsanforderung wird ausgelöst.

Fig. 6 zeigt beispielhaft eines jener Signale bzw. Daten bzw. Messgrößen, welche bei Drehung der Schneckenwelle (5) von einem Sensor (15) am Einbringungsort (B) orthogonal zur Längsache (6) der Schnecke (5) erfasst werden kann. Wird hierbei ein berührungslos arbeitender Sensor (15) oder Messwertgeber verwendet, so sieht der beispielsweise fest in einer Sensorbohrung (S) im Gehäuse (12) eingeschraubte Sensor (15), dass sich der Abstand des durch den Sensor fixierten Punktes auf der Schneckenwelle (5) zum Sensor (15) sinusförmig verhält. Da diese Sinusform stetig wiederkehrt, lässt sich also durch eine an den Sensor (15) angeschlossene oder anschließbare Elektronik bzw. Auswerteeinrichtung (E) der Sollabstand zwischen dem fixierten Punkt auf der Schneckenwelle (5) und dem Sensor (15) am Ort (B) stets vorberechnen.

Fig. 7a und Fig. 7b zeigen jeweils in schematischer Weise sehr ähnliche Aufbauten einer Anlage bzw. Maschine (38) oder einer Fahrzeugbaugruppe (34), welche mit dem Schwenkantriebs- oder Schneckengetriebesystem oder Schwenktrieb (1) ausgerüstet ist. Insbesondere wird offenbart, dass einer oder mehrere Sensoren (15) jeweils mittels einer elektrischen - alternativ einer optischen - Leitung (L), alternativ via Funk oder Drahtlosverbindung (LW), mit einer Auswerteeinrichtung (E) verbunden sind. An jene Auswerteeinrichtung (E), welche in der Regel zumindest elektronisch oder gar vorzugsweise computergestützt arbeitet, werden die mittels der Sensoren erfassten oder sensierten Messgrößen bzw. Daten bzw. Signale (33) weitergeleitet. Idealerweise werden diese Messgrößen bzw. Daten bzw. Signale (33) innerhalb der Auswerteeinrichtung (E) EDV-technisch weiterverarbeitet, gegebenenfalls gefiltert und/ oder verstärkt. In Fig. 7a und Fig. 7b sind die Auswerteeinrichtungen (E) jeweils schematisch beabstandet von dem Schwenktrieb (1) angebracht. In der Praxis kann der Abstand zwischen Schwenktrieb (1) und Auswerteeinrichtung (E) nur wenige Zentimeter betragen. Der Abstand zwischen Schwenktrieb (1) und Auswerteeinrichtung (E) kann jedoch auch viele Meter, sogar hunderte von Metern betragen.

Ähnlich verhält es sich mit dem IT- und Elektroniksystem (35), beispielsweise in Ausprägung eines Diagnosecomputers oder einer Wartungseinrichtung, ggfs. inklusive Software oder eines Zustandsmonitoringsystems (CMS). Jenes ist in der Praxis entweder mittels mindestens einer elektrischen - alternativ einer optischen - Leitung (L), alternativ sogar via Funk oder Drahtlosverbindung (LW), mit den Auswerteeinrichtungen (E) verbunden.

Es hat sich als vorteilhaft herausgestellt, wenn dieses IT- und Elektroniksystem (35), beispielsweise in Ausprägung eines Diagnosecomputers oder einer Wartungseinrichtung, ggfs. inklusive Software oder eines Zustandsmonitoringsystems (CMS), direkt mit einer Erfahrungs- oder Wissensdatenbank (37) gekoppelt ist, wie in Fig. 7a und Fig. 7b schematisch dargestellt. Um die Eingangs genannte "Zentralkontrolle bzw. -Überwachung" oder die "Fernwartung bzw. -Überwachung" des Schwenkantriebs- oder Schneckengetriebesystems bzw. Schwenktrieb (1) zu realisieren, ist das IT- und Elektroniksystem (35) und/ oder die Erfahrungs- oder Wissensdatenbank (37) mit einem Zentral - oder Kontrollrechner (36) verbunden. Dieser Zentral - oder Kontrollrechner (36) kann entweder in unmittelbarer Nähe der Schwenkantriebs - oder Schneckengetriebesystems- bzw. Schwenktrieb- (1) Vorrichtung angebracht oder errichtet sein, oder aber auch viele Kilometer entfernt.

Beispielsweise hat sich als vorteilhaft herausgestellt, wenn alle in einer Windkraftanlage, vgl. Fig. 8b, angebrachten Schneckengetriebesystems- bzw.
Schwenktriebs- (1) Vorrichtungen mit einem Zustandserkennungs- und Zustandsüberwachungs-System (39) ausgerüstet sind, welche jeweils die sensierten oder erfassten Messgrößen bzw. Daten bzw. Signale (33) an eine zentrale Station, den vorgenannten Zentral - oder Kontrollrechner (36), übermitteln.

Dieser Zentral - oder Kontrollrechner (36) kann beispielsweise am Rande eines Windkraftanlagen-Feldes stehen und somit die Daten von einer, zwei, drei, vier, ... zehn, ... fünfzehn, ... bis zu "n" mit Schneckengetriebesystems- bzw. Schwenktriebs- (1) Vorrichtungen ausgestatteter Windkraftanlagen erfassen und somit zentral überwachen und/ oder kontrollieren.

Ein ähnlicher Anwendungsfall ist bei Solaranlagen sinnvoll, vgl. Fig. 8 a. Ein Zentral - oder Kontrollrechner (36) kann beispielsweise am Rande eines Solaranlagen-Feldes stehen und somit die Daten von einer, zwei, drei, vier, ... zehn, ... fünfzehn, ... bis zu "n" mit Schneckengetriebesystems- bzw. Schwenktriebs- (1) Vorrichtungen ausgestatteter Solaranlagen erfassen und somit zentral überwachen und/ oder kontrollieren.

Dabei hat sich jeweils als vorteilhaft herausgestellt, wenn das jeweilige das IT- und Elektroniksystem (35) und/ oder die Erfahrungs- oder Wissensdatenbank (37) entweder im Fuß einer solchen Maschine bzw. Anlage (38) installiert ist, oder sogar nur einfach vorhanden ist - und zwar in unmittelbarer Umgebung des vorgenannten Zentral - oder Kontrollrechners (36).

Letztlich zeigen auch die Fig. 9 a sowie die Fig. 9b das vorgenante Schwenkantriebs- oder Schneckengetriebesystem (1) zur Installation in einer Anlage bzw. Maschine (38) oder als Baugruppe eines Fahrzeuges (34), jeweils in perspektivischer Darstellung. Die Schneckenwelle verfügt stets über ein in diese Schneckenwelle (5) eingeformtes oder eingearbeitetes Schraubengewinde (4). Im Betrieb kämmt dieses Gewinde (4) mit einem Anschlusselement (2), vorzugsweise mit einem Schneckenrad (2), über eine in das Schraubengewinde (4) eingreifende Verzahnung (3). Jenes Anschlusselement (2) oder Schneckenrad (2) ist zumindest zweiseitig von einem Gehäuse (14) geschlossenes oder vollgeschlossen. Dies kann beispielsweise ein metallisches Guss- oder Schmiedegehäuse sein. Innerhalb dieses Gehäuses (14) ist das Anschlusselement (2) oder Schneckenrad (2) mittels Drehverbindung(en) oder Wälzlagerung(en) (40) gegen das Gehäuse (14) mittelbar oder unmittelbar abgestützt. Durch die Verwendung einer Drehverbindung(en) oder Wälzlagerung(en) (40) ist das Anschlusselement (2) jedoch intern verdrehbar gelagert.

Aus Fig. 9 a sowie die Fig. 9b ist gut zu erkennen, dass die jeweilige Schneckenwelle (5) von einem, beispielsweise separierten, Gehäuseteil oder Gehäuseabschnitt (12) geschützt ist, wobei dieser Gehäuseteil-/ abschnitt (12) einen oder mehrere Aufnahme- oder Befestigungsort(e) (A ; B ; S) für Sensoren bzw. Sensorik (15) vorsieht. Zusätzlich bzw. alternativ sieht auch das Gehäuse (14) einen oder mehrere Aufnahme-/ Befestigungsort(e) (C ; S) für Sensoren bzw. Sensorik (15) vor.

**Bezugszeichenliste:**

| | | | | |
|---|---|---|---|---|
| 1 | Schwenkantriebs- oder Schneckengetriebesystem , Schwenktrieb | | | |
| 2 | Anschlusselement, z.B. Schneckenrad | | | |
| 3 | Verzahnung | | | |
| 4 | Schraubengewinde, Gewinde | | | |
| 5 | Schneckenwelle , Schnecke | 6 | Längsachse , Längsrichtung |
| 7 | Antriebsmotor , Motor | 8 | Abtriebswelle |
| 9 | Ausnehmung | 10 | Teil |
| 11 | Motorgehäuse | 12 | Gehäuseteil-/ abschnitt |
| 13 | Gehäuseteil-/ abschnitt | 14 | Gehäuse |
| 15 | Sensor, Sensorik | 16 | Ende |
| 17 | Ende | 18 | Adapter |
| 19 | Befestigungsflansch | 20 | Endbereich |
| 21 | Endbereich | 22 | Lagerung z.B. mechanisch |
| 23 | Abstufung | 24 | Wellenbereich |
| 25 | Wellenbereich | 26 | Feder, z.B. Tellerfeder |
| 27 | Abschlussflansch | 28 | Abschlussflansch |
| 29 | Referenzkörper | 30 | Ausgangsanschluss |
| 31 | Stirnseite | 32 | Dichtung |
| 33 | Messgröße, Datum , Signal | 34 | Fahrzeugbaugruppe |
| 35 | IT- und Elektroniksystem | 36 | Zentral- oder Kontrollrechner |
| 38 | Maschine oder Anlage | 40 | Wälzlager , Drehverbindung |
| 39 | Zustandserkennungs- und Zustandüberwachungs-System, z.B. elektronisch | | | |
| 37 | Erfahrungs- oder Wissensdatenbank, z.B. elektronisch , computergestützt | | | |
| E | Auswertesystem , Auswertungseinrichtung | | | |
| LW | Drahtlosverbindung, z.B. funk | L | Leitung , z.B. elektrisch |
| A | Aufnahme-/ Befestigungsort | B | Aufnahme-/ Befestigungsort |
| C | Aufnahme-/ Befestigungsort | S | Bohrung, z.B. Sensorbohrung |

**Patentansprüche**

**1.** Schwenkantriebs- oder Schneckengetriebesystem (1), vorteilhafterweise zur Installation in einer Anlage bzw. Maschine (38) oder als Baugruppe eines Fahrzeuges (34), aufweisend mindestens eine Schneckenwelle (5) und wenigstens ein in diese Schneckenwelle (5) eingeformtes oder eingearbeitetes Schraubengewinde (4), sowie ein mit diesem Schraubengewinde (4) kämmendes Anschlusselement (2), vorzugsweise welches ausgeprägt ist als ein Schneckenrad (2) das mindestens über eine in das Schraubengewinde (4) eingreifende Verzahnung (3) mit der mindestens einen Schneckenwelle (5) kämmt, wobei das wenigstens eine Anschlusselement (2) durch ein zumindest zweiseitig geschlossenes oder vollgeschlossenes Gehäuse (14), beispielsweise ein metallisches Guß- oder Schmiedegehäuse, geschützt ist und innerhalb dieses Gehäuses (14), insbesondere mittels Drehverbindung(en) oder Wälzlagerung(en) (40), insbesondere welche gegen das Gehäuse (14) mittelbar oder unmittelbar abgestützt sind, verdrehbar gelagert ist, wobei mindestens eine Ring- oder Planfläche des Anschlusselementes (2) oder des umgebenden Gehäuses (14) zur Anbringung an benachbarte Anschlusskonstruktion(en) (38 ; 34), beispielsweise mittels kranzartig angeordneten Verschraubungen des Anschlusselementes (2) an ein mit Befestigungsbohrungen versehenes Maschinen-, Fahrzeug-, oder Anlagenteil (34 ; 38), vorgesehen ist,
**dadurch gekennzeichnet, dass**

die mindestens eine Schneckenwelle (5) von einem, beispielsweise vom Gehäuse (14) separierten, vorzugsweise eigens dafür vorgesehenen, Gehäuseteil oder Gehäuseabschnitt (12) geschützt ist, wobei dieser Gehäuseteil-/ abschnitt (12) einen oder mehrere Aufnahme- oder Befestigungsort(e) (A ; B ; S) für Sensoren bzw. Sensorik (15) vorsieht, alternativ sogar das Gehäuse (14) einen oder mehrere Aufnahme-/ Befestigungsort(e) (C ; S) für Sensoren bzw. Sensorik (15) vorsieht, vorzugsweise für Sensorik (15) zur Erfassung von Messgrößen oder Daten oder Signalen (33) der Schneckenwelle (5), insbesondere von Überlast- und/ oder Positions- und/ oder Lagemessgrößen entlang oder orthogonal zu deren Längsachse (6), alternativ oder zusätzlich sogar für Sensorik (15) zur Erfassung weiterer Messgrößen (33), beispielsweise des Anschlusselementes (2).

2. Anlage oder Maschine (38) zur Energieübertragung, insbesondere als Kran - oder Schwerlastanlage oder Lastenbeförderungsmaschine, oder zur Energiewandlung, insbesondere in Form einer Solaranlage oder Windenergieanlage oder Gezeitenkraftmaschine, alternativ sogar eine sinnentsprechend im Fahrzeug, beispielweise im Kran-/ Bagger - oder Schwerlasttransportfahrzeug, angeordnete Fahrzeugbaugruppe (34), beinhaltend mindestens ein Schwenkantriebs- oder Schneckengetriebesystem (1),
**dadurch gekennzeichnet, dass**
ein Zustandserkennungs- und Zustandsüberwachungs-System (39) zur mindestens zeitweisen, gegebenenfalls periodischen, vorzugsweise sogar permanenten, (werte-, signal- oder datentechnischen), Erfassung und Überwachung von Messgrößen oder Daten oder Signalen (33) des Schwenkantriebs- oder Schneckengetriebesystems (1) gegeben ist, insbesondere um verschleissbasierte Wartungsintervalle zu ermitteln, aufweisend:

- mindestens einen an das Schwenkantriebs- oder Schneckengetriebesystem (1) eingebrachten oder anbringbaren Sensor (15), - vorzugsweise welcher mittelbar oder unmittelbar an oder in einem Aufnahme-/ Befestigungsort (A ; B ; C ; S) in oder an dem Gehäuse (14) oder einem Gehäuseteil-/ abschnitt (12 ; 13) befestigt ist oder aufgenommen wird bzw. dort (A ;
B ; C ; 12 ; 13 ; 14 ; S) befestigt oder montiert werden kann.

3. Schwenkantriebs- oder Schneckengetriebesystem (1) oder damit ausgestattete Anlage bzw. Maschine (38) oder Fahrzeugbaugruppe (34) nach Anspruch 1 oder 2 **dadurch gekennzeichnet, dass** mindestens einer der Sensoren (15) die Messgrößen und/ oder Daten und/ oder Signale (33) unter Nutzung paralleler oder serieller Datenübertragungstechnik an ein, vorzugsweise elektronisches oder computergestütztes, Auswertesystem (E) weiterleitet, vorzugsweise unter Nutzung elektrischer Leitungen (L), beispielsweise diskreter (sogenannter "hartverdrahteter") Leitungen unter Nutzung der IEEE 802 - oder IEEE 488 - Standards, alternativ unter Nutzung von Netzwerkleitungen oder Busleitungen mindestens eines Feldbussystems wie I$^2$C-Bus oder LIN-Bus oder Ethernet-Bus oder Profibus oder USB-Bus oder FireWire-Bus oder CAN/CANopen-Bus oder MOST-Bus oder dergleichen, alternativ mittels drahtloser Übertragungstechnologie unter Nutzung von Drahtlosverbindung(en) (LW), beispielsweise gemäß den allgemeinen IEEE 802.11 - Standards, gegebenenfalls sogar zur Anbindung an ein RFID-, Bluetooth-, Infrarot-, WPAN-, GSM-, oder UMTS-Drahtlosnetzwerk.

4. Schwenkantriebs- oder Schneckengetriebesystem (1) oder damit ausgestattete Anlage bzw. Maschine (38) oder Fahrzeugbaugruppe (34) nach Anspruch 1 oder 2 **dadurch gekennzeichnet, dass**
der mindestens eine Sensor bzw. die Sensorik (15) direkt oder indirekt an das Schwenkantriebs- oder Schneckengetriebesystem (1) an- oder eingebracht wird oder an- oder eingebracht werden kann, beispielsweise mittels eigens für den Sensor bzw. die Sensorik (15) eingebrachte Bohrung(en) (S), gegebenenfalls sogar unter Zuhilfenahme von Haltevorrichtungen wie zum Beispiel Installations- und Montage/ oder Halteblechen, eventuell separat gesichert durch Sensorikschutzgehäuse, beispielsweise in Form eines aus Blech oder Gussmetall bestehenden Hohlkörpers mit Schwenkantriebs- oder Schneckengetriebesystems-(1) - seitiger Öffnung.

5. Schwenkantriebs- oder Schneckengetriebesystem (1) oder damit ausgestattete Anlage bzw. Maschine (38) oder Fahrzeugbaugruppe (34) nach Anspruch 1 oder 2 **dadurch gekennzeichnet, dass**
entlang oder in Richtung der Längsachse (6), jedenfalls an wenigstens einem der beiden längsseitigen Enden (16 ; 17) der Schnecke oder Schneckenwelle (5), wenigstens ein Antriebsmotor (7), gegebenenfalls umgeben von Motorgehäuse (11), an das Gehäuseteil (12 ; 13), insbesondere an den jeweiligen Abschlussflansch (27 ; 28), angeschlossen ist oder angeschlossen werden kann, vorzugsweise in Ausprägung eines Elektromotors, alternativ als Hydraulikmotor oder Ölpumpe, wobei dieser wenigstens eine Antriebsmotor (11) rotatorische Energie über mindestens eine Abtriebswelle (8) auf Schnecke oder Schneckenwelle (5) übertragen kann.

6. Schwenkantriebs- oder Schneckengetriebesystem (1) oder damit ausgestattete Anlage bzw. Maschine (38) oder Fahrzeugbaugruppe (34) nach Anspruch 1 oder 2 **dadurch gekennzeichnet, dass**

mehrere, vorzugsweise zwei, alternativ drei, Anschlusskonstruktionen (2) in Form von Schneckenrädern von einem gemeinsamen Gehäuse (14) beherbergt werden, wobei jede dieser Anschlusskonstruktionen (2) mit mindestens einer separaten Schnecke oder Schneckenwelle (5) kämmt, während jede dieser Schneckenwellen (5) über eine eigene Abtriebswelle (8) mit einem Antriebsmotor (7) gekoppelt ist oder gekoppelt werden kann, wobei mehrere Antriebsmotore (7) unabhängig voneinander betrieben werden können, sodass die über die Schneckenwelle (5) initiierte Drehbewegung der ersten Anschlusskonstruktion bzw. Schneckenrads (2) unabhängig von der Drehbewegung der zweiten oder gar dritten Anschlusskonstruktion bzw. Schneckenrads (2) erfolgt.

7.   Schwenkantriebs- oder Schneckengetriebesystem (1) oder damit ausgestattete Anlage bzw. Maschine (38) oder Fahrzeugbaugruppe (34) nach Anspruch 1 oder 2 **dadurch gekennzeichnet, dass** mindestens einer der Sensoren bzw. mindestens ein Teil der Sensorik (15) als berührungsloser Sensor oder Näherungsinitiator oder Annäherungsschalter ausgeführt ist, beispielsweise aufweisend einen internen Oszillator, vorzugsweise unter Verwendung des kapazitiven oder magnetischen oder induktiven Wirkprinzips, alternativ als gegebenenfalls optischer Sensor im Sinne eines Inkremental- oder Absolutwertgebers, und/ oder ein weiterer Teil der Sensorik (15) als Füllstandssensor oder Füllstandsschalter oder als Temperatursensor oder gar als Hallsensor, etwa zur berührungslosen Drehzahlmessung der Schnecke bzw. Schneckenwelle, oder als Sensor auf Basis von Dehn-Mess-Streifen (DMS), ausgeführt ist.

8.   Schwenkantriebs- oder Schneckengetriebesystem (1) oder damit ausgestattete Anlage bzw. Maschine (38) oder Fahrzeugbaugruppe (34) nach einem der vorgenannten Ansprüche **dadurch gekennzeichnet, dass** mindestens ein Sensor (15), alternativ die gesamte Sensorik (15), direkt in das Gehäuse (12 ; 13 ; 14) des Schwenkantriebs- oder Schneckengetriebesystem (1) über je eine Bohrung(en) (S) eingebracht ist, wobei solcher Sensor (15) und wenigstens ein Auswertesystem (E) von einem gemeinsamen Sensorikschutzgehäuse umgeben ist, welches ebenso direkt an das Gehäuse (12 ; 13 ; 14) des Schwenkantriebs- oder Schneckengetriebesystem (1) angebracht, beispielsweise angeflanscht und mittels Befestigungsschrauben verschraubt, alternativ durch Schweißung mit dem Gehäuse (12 ; 13 ; 14) verbunden, ist.

9.   Verfahren zur Diagnose und/ oder Überwachung, insbesondere zur Ermöglichung zustandsbasierter oder optimierter Wartung, eines Schwenkantriebs - oder Schneckengetriebesystem (1), vorteilhafterweise welches installiert ist in einer Anlage bzw. Maschine (38) oder als Baugruppe eines Fahrzeuges (34), aufweisend mindestens eine Schneckenwelle (5) und wenigstens ein in diese Schneckenwelle (5) eingeformtes oder eingearbeitetes Schraubengewinde (4), sowie mindestens ein mit diesem Schraubengewinde (4) kämmendes Anschlusselement (2), vorzugsweise welches ausgeprägt ist als ein Schneckenrad (2), wobei das wenigstens eine Anschlusselement (2) durch ein zumindest zweiseitig geschlossenes oder vollgeschlossenes Gehäuse (14), beispielsweise ein metallisches Guss- oder Schmiedegehäuse, geschützt ist und innerhalb dieses Gehäuses (14), insbesondere mittels Drehverbindung(en) oder Wälzlagerung(en) (40) welche gegen das Gehäuse (14) mittelbar oder unmittelbar abgestützt sind, verdrehbar gelagert ist, wobei mindestens eine Ring- oder Planfläche des Anschlusselementes (2) oder des umgebenden Gehäuses (14) zur Anbringung an benachbarte Anschlusskonstruktion(en) (38 ; 34), beispielsweise mittels kranzartig angeordneten Verschraubungen, vorgesehen ist, **dadurch gekennzeichnet, dass** mindestens ein Sensor (15) Messgrößen bzw. Daten bzw. Signale (33), beispielsweise der Drehbewegung und/ oder der Axialverschiebung der Schnecke oder Schneckenwelle (5), vorzugsweise ebenso herrschende Überlast- und/ oder herrschende Fehlpositionierung in axialer und/ oder radialer Richtung dieser Schnecke oder Schneckenwelle (5) entlang oder orthogonal zur Längsachse (6), sensiert oder erfasst.

10.  Verfahren zur Diagnose und/ oder Überwachung, insbesondere zur Ermöglichung zustandsbasierter oder optimierter Wartung, eines Schwenkantriebs, - oder Schneckengetriebesystem (1), beziehungsweise der damit ausgestatteten Anlage bzw. Maschinen (38) oder Fahrzeugbaugruppe (34) **dadurch gekennzeichnet, dass**

- erstens die mittels wenigstens einem Sensor (15) gemessen oder erfassten Messgrößen und/ oder Daten und/ oder Signale (33), beispielsweise für die Drehbewegung der Schnecke oder Schneckenwelle (5) und/ oder für die Axialverschiebung der Schnecke oder Schneckenwelle (5) entlang oder orthogonal der Längsachse (6), an ein, beispielsweise mit dem wenigstens einen Sensor (15) verbundenen, Auswertesystem (E), weitergeleitet, gegebenenfalls auch gleichgerichtet, werden, und
- zweitens diese ggf. gleichgerichtete(n) Messgrößen und/ oder Daten und/ oder Signale (33) (auf)integriert oder (auf)summiert werden, beispielsweise innerhalb des Auswertesystems (E), und
- drittens die (auf)integrierten oder (auf)summierten Messgrößen und/ oder Daten und/ oder Signale (33) an ein Zustandserkennungs- und Zustandsüberwachungs- System (39) und/ oder mindestens ein IT- und Elektroniksystem (35) und/ oder eine Wissensdatenbank (37), gegebenenfalls sowie an einem Zentral- oder Kontrollrechner (36), übermittelt werden, beispielsweise unter Nutzung elektrischer Leitungen (L) oder Netzwerkleitungen bzw. Busleitungen mindestens eines Feldbussystems, alternativ mittels drahtloser Übertragungstechnologie unter Nutzung von Drahtlosverbindung(en) (LW), beispielsweise gemäß den allgemeinen IEEE - Standards.

11. Verfahren zur Diagnose und/ oder Überwachung, insbesondere zur Ermöglichung zustandsbasierter oder optimierter Wartung, eines Schwenkantriebs - oder Schneckengetriebesystem (1), beziehungsweise der damit ausgestatteten Anlage bzw. Maschinen (38) oder Fahrzeugbaugruppe (34), **dadurch gekennzeichnet, dass** ein mittelbar oder unmittelbar an oder in einem Aufnahme-/ Befestigungsort (A ; B ; S) in oder an dem Gehäuseteil oder Gehäuseabschnitt (12) vorhandener erster Sensor (15) vorhandene Bewegung(en) der Schnecke oder Schneckenwelle (5) über Messgrößen bzw. Daten bzw. Signale (33) sensiert oder erfasst, und ferner diese vorhandene Bewegung(en) der Schnecke oder Schneckenwelle (5) mit gegebenenfalls ebenfalls vorhandenen Bewegung(en) des Anschlusselementes (2) plausibilisiert, vorzugsweise indem Vergleich der Messgrößen bzw. Daten bzw. Signale (33) der Schnecke oder Schneckenwelle (5) mit den Messgrößen bzw. Daten bzw. Signale (33) des Anschlusselementes (2) vorgenommen wird, wobei die Bewegung(en) des Anschlusselementes (2) von einem zweiten in oder an dem Gehäuse (14), gegebenenfalls mittelbar oder unmittelbar an oder in einem Aufnahme-/ Befestigungsort (C; S) eingebrachten, vorhandenen Sensor (15) sensiert oder erfasst wird, wobei dieser zweite Sensor (15) physikalisch gleichartige Messgrößen bzw. Daten bzw. Signale (33) der Bewegung des Anschlusselementes (2) sensiert oder erfasst wie der erste Sensor.

12. Verfahren zur Diagnose und/ oder Überwachung nach wenigstens einem der Ansprüche 9 bis 11 **dadurch gekennzeichnet, dass** die Plausibilisierung in der Sensorik (15), alternativ im Auswertesystems (E), gegebenenfalls sogar im Zustandserkennungs- und Zustandsüberwachungs- System (39) und/ oder einem IT- und Elektroniksystem (35), vorzugsweise sogar in einer Wissensdatenbank (37), erfolgt.

13. Verfahren zur Diagnose und/ oder Überwachung nach wenigstens einem der Ansprüche 9 bis 12 **dadurch gekennzeichnet, dass** die Plausibilisierung ein Vergleich der sensierten oder erfassten Drehrichtung und/ oder Geschwindigkeit und/ oder des Drehwinkels der Schnecke oder Schneckenwelle (5) mit der sensierten oder erfassten Drehrichtung und/ oder Geschwindigkeit und/ oder des Drehwinkels des Anschlusselementes (2) ist.

14. Verfahren zur Diagnose und/ oder Überwachung nach wenigstens einem der Ansprüche 9 bis 13 **dadurch gekennzeichnet, dass** die Plausibilisierung ein Vergleich der sensierten oder erfassten Beschleunigung und/ oder des Drucks, beispielsweise des mechanischen Drucks, alternativ des hydrostatischen Drucks oder sogar des Gasdrucks, der Schnecke oder Schneckenwelle (5) mit der sensierten oder erfassten Beschleunigung und/ oder des Drucks, beispielsweise des mechanischen Drucks, alternativ des hydrostatischen Drucks oder sogar des Gasdrucks, des Anschlusselementes (2) ist.

15. Verfahren zur Diagnose und/ oder Überwachung nach wenigstens einem der Ansprüche 9 bis 14 **dadurch gekennzeichnet, dass** die Plausibilisierung ein Vergleich des sensierten oder erfassten Feuchte- oder Wassergehalts und/ oder des Schmiermittelfüllstands- und/ oder Schmiermittelzustands und/ oder der Temperatur im Gehäuseteil (12) der Schnecke oder Schneckenwelle (5) mit dem sensierten oder erfassten Feuchte- oder Wassergehalt und/ oder dem Schmiermittelfüllstand- und/ oder Schmiermittelzustand und/ oder der Temperatur im Gehäuses (14) des Anschlusselementes (2) ist.

EP 2 735 766 A1

Fig. 1

Fig. 2

25

**Fig. 3**

**Fig. 4**

**Fig. 5**

**Beispielhaftes Sensor (15) Signal am Ausgangsanschluss (30):**
*sample of sensor (15) signal at interface (30):*

**Fig. 6**

## SCHEMA

Fig. 7 a

## SCHEMA

**Fig. 7 b**

**Solarpaneele**
*solar panels*

38

11

1

E

2

39

Turm
*tower*

36

37 ; 38

Fundament *base*

Fig. 8 a

**Rotorblatt** *blade*

**38**

**Gondel** *nacelle*

1

E

E

1

**39**

LW

**Turm** *tower*

LW

37 ; 38

36

L

**Fundament** *base*

Fig. 8 b

Wälzlager
Bearing
oder/or
Drehverbindung
slew drive
**40**

**6**

**11**

**1**

**B ; S**    **4**

**5**

**12**

**2**

**14**

**19**

**C ; S**

**14**

Befestigungsflansch für optimale Anbauteile
(Potentiometer, Vorbaubremse, Permanentbremse)

mounting flange for optional
add on parts
(such as potentionmeter, permanent brake or
front-end brake)

**Fig. 9 a**

1

11   6

2

3

12

B ; S

5

4

14

40

Wälzlager
Bearing
oder/or
Drehverbindung
slew drive

C ; S ; A

19

Befestigungsflansch für optimale Anbauteile
(Potentiometer, Vorbaubremse, Permanentbremse)

mounting flange for optional
add on parts
(such as potentionmeter, permanent brake or
front-end brake)

**Fig. 9 b**

Europäisches
Patentamt

European
Patent Office

Office européen
des brevets

**EUROPÄISCHER RECHERCHENBERICHT**

Nummer der Anmeldung

EP 12 00 7862

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2009 057422 A1 (CWB ANTRIEBSTECHNIK GMBH [DE]) 9. Juni 2011 (2011-06-09) * Zusammenfassung; Abbildungen 1,2 * * Absatz [0005] * ----- | 1-15 | INV. F16H1/16 |
| X | DE 198 08 218 A1 (ITT MFG ENTERPRISES INC [US]) 2. September 1999 (1999-09-02) * Ansprüche; Abbildungen * ----- | 1-15 | |
| X | EP 1 279 860 A2 (BOSCH GMBH ROBERT [DE]) 29. Januar 2003 (2003-01-29) * Absatz [0022]; Abbildung 1 * ----- | 1-15 | |

**RECHERCHIERTE SACHGEBIETE (IPC)**

F16H

Der vorliegende Recherchenbericht wurde für alle Patentansprüche erstellt

| Recherchenort | Abschlußdatum der Recherche | Prüfer |
|---|---|---|
| München | 16. Mai 2013 | Meritano, Luciano |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
.........................................................................
& : Mitglied der gleichen Patentfamilie, übereinstimmendes
    Dokument

EPO FORM 1503 03.82 (P04C03)

# EP 2 735 766 A1

**ANHANG ZUM EUROPÄISCHEN RECHERCHENBERICHT
ÜBER DIE EUROPÄISCHE PATENTANMELDUNG NR.**

EP 12 00 7862

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

16-05-2013

| Im Recherchenbericht angeführtes Patentdokument | Datum der Veröffentlichung | Mitglied(er) der Patentfamilie | | Datum der Veröffentlichung |
|---|---|---|---|---|
| DE 102009057422 A1 | 09-06-2011 | KEINE | | |
| DE 19808218 A1 | 02-09-1999 | KEINE | | |
| EP 1279860 A2 | 29-01-2003 | DE | 10136811 A1 | 13-02-2003 |
| | | EP | 1279860 A2 | 29-01-2003 |
| | | ES | 2271148 T3 | 16-04-2007 |

Für nähere Einzelheiten zu diesem Anhang : siehe Amtsblatt des Europäischen Patentamts, Nr.12/82

EPO FORM P0461

35